(19) **Europäisches Patentamt European Patent Office Office européen des brevets**

(11) **EP 3 002 097 B1**

(12) **FASCICULE DE BREVET EUROPEEN**

(45) Date de publication et mention de la délivrance du brevet:
**26.09.2018 Bulletin 2018/39**

(51) Int Cl.:
*B29B 15/10* (2006.01)     *B29B 15/12* (2006.01)
*B29C 70/40* (2006.01)     *B29C 70/52* (2006.01)
*C08G 69/48* (2006.01)     *C08J 5/04* (2006.01)
*B29K 77/00* (2006.01)     *B29C 67/24* (2006.01)
*B29C 70/24* (2006.01)     *C08J 5/24* (2006.01)
*C09D 177/06* (2006.01)

(21) Numéro de dépôt: **15194338.8**

(22) Date de dépôt: **23.10.2012**

(54) **MATERIAU COMPOSITE THERMOPLASTIQUE RENFORCE DE FIBRES SYNTHETIQUES ET PROCEDE DE FABRICATION**

THERMOPLASTISCHES VERBUNDMATERIAL, DAS MIT SYNTHETIKFASERN VERSTÄRKT IST, UND HERSTELLUNGSVERFAHREN

THERMOPLASTIC COMPOSITE MATERIAL REINFORCED WITH SYNTHETIC FIBRES AND MANUFACTURING METHOD

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.10.2011 FR 1159658**

(43) Date de publication de la demande:
**06.04.2016 Bulletin 2016/14**

(62) Numéro(s) de document de la (des) demande(s) initiale(s) en application de l'article 76 CBE:
**12189569.2 / 2 586 585**

(73) Titulaire: **ARKEMA FRANCE**
**92700 Colombes (FR)**

(72) Inventeurs:
• **HOCHSTETTER, Gilles**
**94240 L'HAY LES ROSES (FR)**
• **BRIFFAUD, Thierry**
**27300 BERNAY (FR)**
• **GLOTIN, Michel**
**92210 SAINT-CLOUD (FR)**
• **NOGUES, Pierre**
**27300 BERNAY (FR)**
• **KHUSRAWY, Maliha**
**27300 BERNAY (FR)**

(74) Mandataire: **Killis, Andréas**
**ARKEMA France**
**Département Propriété Industrielle**
**420, rue d'Estienne d'Orves**
**92705 Colombes Cedex (FR)**

(56) Documents cités:
EP-A1- 0 174 225    EP-A1- 0 628 588
EP-A1- 0 685 528    EP-A1- 2 386 397
EP-A2- 0 857 745    WO-A1-95/35343

Remarques:
Le dossier contient des informations techniques présentées postérieurement au dépôt de la demande et ne figurant pas dans le présent fascicule.

EP 3 002 097 B1

**Description**

La présente invention concerne le domaine des matériaux composites thermoplastiques. Plus particulièrement, elle concerne un procédé de fabrication d'un matériau composite à renfort de fibres synthétiques imprégné avec un polymère thermoplastique, un produit intermédiaire, qui est un préimprégné fibreux, une composition précurseur utilisée pour la mise en oeuvre d'un tel procédé, des pièces composites qui en résultent et applications comme pièces de structure.

Les matériaux composites et, plus particulièrement, les matériaux composites comprenant des fibres de renfort imprégnées d'une matrice polymère sont utilisés dans de nombreux domaines techniques, en particulier dans les applications aéronautique, l'aérospatiale, l'éolienne, automobile, ferroviaire, marine. Ces applications requièrent principalement des composites de hautes performances mécaniques, en particulier à des températures d'utilisation élevées.

Les composites, avec matrice à base de polymères thermodurcissables, occupent une place prépondérante sur ces marchés grâce à leurs procédés de fabrication et leur facilité de mise en oeuvre. Ces matériaux sont de plus en plus utilisés pour l'allégement des structures, par exemple dans l'aéronautique et dans l'automobile. Cependant, les polymères thermodurcissables ne peuvent satisfaire à des exigences de plus en plus importantes qui pèsent sur les constructeurs, qui sont des contraintes limitantes pour ces matériaux, en particulier pour l'automobile en ce qui concerne : la réduction des temps de cycles, la réduction de la consommation d'énergie et la recyclabilité des matériaux utilisés. Comme autres inconvénients de ces matériaux, on peut citer la toxicité de certains de leurs composants et l'émission de composés organiques volatils (monomères comme le styrène) lors de leur manipulation et mise en oeuvre nécessitant des protections et/ou des conditions de manipulation et de mise en oeuvre particulières. Un inconvénient supplémentaire des matériaux thermodurcissables est le retrait volumique après cuisson qui affecte la stabilité dimensionnelle et l'aspect de surface après moulage et demande un traitement spécifique.

Aussi, les polymères thermoplastiques qui présentent l'avantage d'être facilement recyclables et qui sont, dans le cas des polyamides, plus légers que les polymères thermodurcissables, offrent des nouvelles perspectives dans le domaine des composites en tant que matrice de polymère. Cependant, les procédés actuels de fabrication de composites à matrice thermoplastique sont plus contraignants que ceux mettant en oeuvre des thermodurcissables et la qualité du composite fabriqué n'est pas toujours optimale. Le facteur limitant essentiel pour la mise en oeuvre d'un composite thermoplastique est la viscosité du polymère thermoplastique qui sera utilisé comme matrice, imprégnant le substrat fibreux. En effet, même à l'état fondu, cette viscosité reste élevée et rend ainsi l'imprégnation du substrat fibreux plus difficile qu'une résine liquide, comme par exemple une résine thermodurcissable à base de polyester insaturé ou de vinyl ester.

La matrice polymère doit avoir d'abord une bonne imprégnation des fibres de renfort afin de permettre la transmission aux fibres de renfort des contraintes mécaniques subies par le matériau composite avec ainsi une réponse plus performante dudit matériau composite à la sollicitation mécanique. Ensuite, le revêtement desdites fibres de renfort par cette matrice procure une protection chimique à ces fibres. En particulier, pour qu'un composite à matrice thermoplastique possède de bonnes propriétés mécaniques à l'utilisation finale, notamment en terme de résistance au choc, il est nécessaire que la masse moléculaire du polymère thermoplastique de la matrice soit aussi élevée que possible. Par contre, cette caractéristique de masse élevée se traduit, lors de la fabrication du composite, par une forte viscosité à l'état fondu de la matrice. Cette viscosité pose de sérieuses difficultés pour parvenir à une imprégnation convenable des fibres : ainsi, le composite obtenu peut présenter des défauts d'imprégnation avec des microvides créés qui sont susceptibles de provoquer des déficiences mécaniques, en particulier un délaminage des fibres et de fragiliser le matériau composite final.

Diverses solutions sont connues pour palier au problème d'imprégnation des fibres. Les industriels ont par exemple tenté d'effectuer l'imprégnation des fibres sous pression plus élevée et/ou d'allonger le temps d'imprégnation. Ces solutions ne sont pas satisfaisantes car, sous l'effet de la pression, les fibres peuvent être désorientées localement entrainant une perte de propriétés du composite et augmenter le temps d'imprégnation pour compenser la forte viscosité de la résine thermoplastique se révèle être trop long pour être compatible avec une production de pièces en grande série. Par ailleurs, un équipement fonctionnant à haute pression est incompatible avec la production de pièces de grandes tailles à cause du coût d'un tel équipement.

Une autre voie pour faciliter l'imprégnation des fibres consiste à agir sur l'interface fibres-matrice. Le brevet EP 0 201 367 propose ainsi un matériau composite polymère thermoplastique renforcé de fibres dans lequel la liaison entre le polymère et les fibres est assurée par un second polymère de basse viscosité thermoplastique favorisant le mouillage des fibres. Cette solution n'est pas facile à mettre en oeuvre car elle requiert, non seulement la présence d'un second polymère, mais en plus, il faut que ce second polymère ait une bonne aptitude au mouillage des fibres et qu'il ait également une bonne compatibilité avec le polymère principal. En outre, ce polymère peut constituer un point faible à cause de sa faible masse moléculaire et/ou de sa faible tenue thermique (basse Tg, bas point de fusion).

D'autre part, FR 2 936 441 décrit l'utilisation comme matrice thermoplastique d'une « résine » polyamide de faible masse moléculaire, avec Mw allant de 5000 à 25000 et non évolutive, pour imprégner une étoffe de renfort pour un article composite. La résine polyamide a comme spécificité un taux de groupements terminaux amines ou carboxy ne dépassant pas 20 meq/kg correspondant essentiellement à des polyamides n'ayant que des fonctions terminales amines ou carboxy. Ceci explique d'ailleurs la non augmentation (non évolutivité) des masses moléculaires de ces polyamides qui est leur caractéristique essentielle. La résine est présentée comme fluide à l'état fondu pour imprégner l'étoffe de renfort mais avec l'absence de possibilité d'allongement de la chaîne.

FR 2 603 891 décrit un procédé de fabrication d'un matériau composite, constitué d'une matrice polyamide renforcée par des fibres de renfort longues. Ces fibres sont imprégnées d'un prépolymère ou d'un oligomère de polyamide qui comporte des fonctions réactives terminales, susceptibles de réagir entre elles sous l'effet d'un chauffage, entraînant l'allongement de la chaîne polymère. L'oligomère ou le prépolymère a une faible masse moléculaire. Les fonctions réactives décrites dans ce document réagissent par condensation avec, en conséquence, la formation de sous-produits de condensation volatils (eau).

WO 2005/061209 décrit un article précurseur d'un matériau composite comprenant une matrice polymérique thermoplastique et des fibres de renfort, dans laquelle la matrice polymérique est elle-même sous forme de fils et/ou de fibres, de sorte à pouvoir former un matériau composite par fusion dudit article précurseur, notamment par thermocompression. Cette solution nécessite une opération de co-mélange préalable, souvent coûteuse, et cela ne règle pas le problème du compromis à faire entre la viscosité de la résine thermoplastique et sa masse moléculaire.

WO 9535343 concerne la recherche d'un procédé permettant de remédier aux dommages causés aux polymères polycondensats tels que polyamides, polyesters ou polycarbonates lors de leur mise en oeuvre ou de leur usage et qui a comme conséquence la rupture de la chaine avec les fragments issus, portant des groupements réactifs terminaux.

EP 0174225 a pour objet des polymères thermoplastiques et thermodurcissables à base d'oligomères polyamides et de composés époxydés, ledit oligomère étant semi-cristallin.

Il y a donc besoin d'abord d'un procédé amélioré de fabrication d'un matériau composite à matrice polymère thermoplastique spécifique, lequel procédé, du fait du choix de cette matrice, a les mêmes avantages qu'un procédé de fabrication d'un matériau composite à matrice polymère thermodurcissable en termes de faible viscosité initiale pour l'imprégnation des fibres, tout en permettant un cycle de production court, c'est-à-dire inférieur à 30 min et plus particulièrement inférieur à 3 min et donc une productivité élevée adaptée à la fabrication de pièces composites, de géométrie complexe et en grande série, et lequel procédé offre en plus les avantages techniques liés à l'emploi des polymères thermoplastiques de haut poids moléculaire, particulièrement avantagés par leur structure en terme de légèreté (notamment dans le cas des polyamides) et de recyclabilité. Ces deux dernières contraintes environnementales sont de plus en plus imposées dans un contexte d'économie d'énergie et de développement durable.

Plus particulièrement, le défi auquel fait face la présente invention est de trouver une solution technique qui est un compromis à trouver entre une bonne imprégnation des fibres de renfort avec une matrice thermoplastique spécifique, qui a une faible viscosité au départ et une masse moléculaire et une Tg assez élevée (au moins 80°C) en final, de manière à assurer des performances mécaniques élevées en particulier à chaud, tout en permettant une mise en oeuvre avec un cycle de production court et à basse ou moyenne pression (inférieure à 30 bars et plus particulièrement inférieure à 10 bars). En plus de la contrainte de la productivité des grandes séries et du compromis difficile entre la viscosité initiale faible et la masse moléculaire finale la plus élevée possible, la chimie spécifique à utiliser pour préparer une telle matrice thermoplastique, en plus de sa cinétique de polymérisation rapide, doit être compatible avec un procédé de fabrication du composite final, et en particulier dans un moule fermé comme le RTM (moulage par transfert résine) ou le S-RIM (RIM structural ou moulage par injection réaction structural) ou l'injection-compression ou l'infusion, avec en particulier l'absence de tout sous-produit éliminé lors de la polymérisation. Donc, la chimie à utiliser doit satisfaire les besoins exposés ci-haut. Plus particulièrement, le procédé de la présente invention permet une très bonne imprégnation des fibres de renfort en utilisant une composition réactive précurseur spécifique, de faible viscosité tout en permettant par sa réaction de polymérisation spécifique d'accroître significativement la masse moléculaire du polymère thermoplastique final en un temps court et conduire ainsi aux performances mécaniques élevées visées avec tenue mécanique à haute température (tenue au fluage) et en particulier avec des performances mécaniques, en termes de module et de contrainte à la rupture, qui évoluent peu jusqu'à une température d'au moins 90°C et de préférence d'au moins 100°C. Ce bon compromis entre la bonne imprégnation des fibres et les performances mécaniques élevées et stables à température élevée est permis par l'utilisation d'une composition réactive précurseur de la matrice thermoplastique comprenant des prépolymères ayant des fonctions réactives identiques, de préférence de masse moléculaire limitée et des allongeurs de chaîne portant des fonctions coréactives avec les fonctions desdits prépolymères par (poly)addition en masse, ces allongeurs étant en particulier sélectionnés spécifiquement pour éviter la formation et l'élimination de sous-produits gazeux ou volatils dans les conditions de mise en oeuvre et éviter donc la formation de microbulles dans le matériau final, comme cela arrive dans une réaction de polymérisation par (poly)condensation, qui est par définition exclue de la présente invention.

Pour la mise en oeuvre d'un tel procédé, il y a donc besoin d'une composition (mélange) précurseur, destinée à former la matrice thermoplastique d'un matériau composite, matrice renforcée de fibres de renfort synthétiques et matrice de Tg élevée (d'au moins 80°C), ladite composition permettant à l'état fondu d'imprégner convenablement les fibres et en même temps d'être capable, après polymérisation par réaction spécifique et sans formation et élimination de sous-produits, d'assurer une excellente cohésion du matériau composite et une transmission optimale des efforts vers les fibres de renfort, pour usage à haute température, en particulier avec des performances mécaniques qui évoluent peu (en termes de module et contrainte à rupture) jusqu'à une température d'au moins 90°C, de préférence d'au moins 100°C.

Il existe en outre un besoin de disposer d'un matériau composite à matrice thermoplastique présentant de bonnes propriétés d'usage, notamment du point de vue de la tenue mécanique à haute température (tenue au fluage), par exemple pour fabriquer des pièces mécaniques de structure.

Il existe donc un besoin pour un procédé de fabrication d'un matériau composite à matrice thermoplastique, sans formation et élimination de sous-produits volatils ou gazeux dans les conditions de mise en oeuvre du matériau composite, qui permet la fabrication d'une pièce composite possédant une meilleure stabilité dimensionnelle et tenue thermique (tenue mécanique à chaud), par rapport aux procédés de fabrication de composites à matrice thermoplastique connus. Le matériau ainsi fabriqué présente des bonnes performances mécaniques même lorsque celui-ci est sollicité à haute température et ceci malgré l'utilisation d'une faible pression pour l'imprégnation des fibres et malgré le temps de cycle de fabrication court.

L'invention repose en particulier sur l'emploi d'un prépolymère thermoplastique faiblement visqueux à l'état fondu, de préférence de faible masse moléculaire, ce qui permet d'imprégner convenablement les fibres, et pour autant très réactif, si bien qu'en polymérisant en masse par polyaddition et en présence d'un allongeur de chaîne spécifique (mélange à l'état fondu), il atteint une masse moléculaire moyenne en nombre assez élevée pour conférer à la matrice ses propriétés mécaniques avantageuses. Le procédé de fabrication du matériau composite selon l'invention est également avantageux en ce qu'il n'occasionne pas de réaction secondaire ni de sous-produits de réaction formés à éliminer, pendant la polymérisation de la matrice. En effet, ces produits éliminés peuvent devenir gazeux et volatils dans les conditions de mise en oeuvre et fragiliser le matériau composite final par les microbulles créées. En particulier, la réaction spécifique utilisée ne génère pas d'eau de condensation. Il n'est donc pas nécessaire de prévoir de système d'évacuation de sous-produits dans les dispositifs employés pour la fabrication et/ou la mise en oeuvre ou forme du matériau composite de la présente invention, ce qui permet de réduire également l'encombrement des installations et le coût énergétique.

L'invention permet aussi de mettre en oeuvre des technologies de mise en forme qui étaient jusqu'à là réservées aux polymères thermodurcissables, tout du moins dans le domaine des composites. Conformément à l'invention, on peut ainsi fabriquer une pièce composite à matrice thermoplastique par moulage structuré par injection et réaction (SRIM) ou par injection-compression ou par infusion ou par RTM.

Le premier objet de l'invention concerne donc un procédé de fabrication d'un matériau composite basé sur l'imprégnation du substrat ou assemblage fibreux d'une ou plusieurs fibres de renfort synthétiques, en utilisant une composition précurseur réactive spécifique, qui est le précurseur de la matrice thermoplastique, laquelle comprend a) au moins un prépolymère réactif dudit polymère thermoplastique et b) au moins un allongeur de chaîne spécifiquement choisi, plus particulièrement en fonction des groupements réactifs dudit prépolymère.

Fait également partie de l'invention, une composition précurseur de la matrice thermoplastique, utilisée pour la mise en oeuvre dudit procédé de fabrication dudit préimprégné.

Un autre objet de l'invention est l'utilisation de ladite composition précurseur pour l'imprégnation d'un assemblage d'une ou plusieurs fibres de renfort synthétiques pour la fabrication d'un matériau fibreux préimprégné ou pour la fabrication d'un matériau composite qui peut être une pièce composite moulée.

Est également couvert par l'invention, un matériau fibreux préimprégné, comme produit semi-fini, résultant de l'imprégnation à l'état fondu d'un assemblage fibreux selon l'invention, par au moins une composition précurseur selon l'invention.

Le dernier objet de l'invention concerne un produit fini qui est un matériau composite qui peut être une pièce composite moulée, lequel matériau composite est obtenu par le procédé de l'invention et plus particulièrement par l'utilisation de ladite composition précurseur.

Le premier objet de l'invention concerne donc un procédé de fabrication d'un matériau composite, comportant un assemblage d'une ou plusieurs fibres de renfort synthétiques ledit assemblage étant imprégné d'au moins un polymère thermoplastique de température de transition vitreuse Tg supérieure ou égale à 80°C, mesurée à l'aide d'un calorimètre différentiel à balayage (DSC), après un 2ème passage en chauffe, suivant la norme ISO 11357-2 avec vitesse de chauffage et de refroidissement de 20°C/min, ledit procédé comprenant :

   i) une étape d'imprégnation dudit assemblage par une composition précurseur à l'état fondu, l'imprégnation étant réalisée à une température telle que la viscosité de ladite composition précurseur à l'état fondu ne dépasse pas 100 Pa.s, mesurée au moyen d'un rhéomètre Physica MCR301 sous balayage d'azote à la température donnée sous cisaillement de $100s^{-1}$, entre deux plans parallèles de diamètre de 50 mm, ladite composition précurseur comprenant :

a) au moins un prépolymère P(X)n dudit polymère thermoplastique, comprenant une chaîne moléculaire P possédant à ses extrémités n fonctions réactives X identiques, ledit prépolymère étant de structure semi-aromatique et/ou semi-cycloaliphatique, avec X étant une fonction réactive parmi : OH, $NH_2$ ou COOH, ledit prépolymère ayant une masse moléculaire moyenne en nombre Mn allant de 500 à 10000 g.mol$^{-1}$, déterminée à partir de la titration des fonctions terminales X selon une méthode potentiométrique, avec n étant 1 ou 2,

b) au moins un allongeur de chaîne, pouvant être représenté par Y-A-Y, comprenant deux fonctions Y identiques, réactives avec l'une au moins desdites fonctions X, avec A étant un espaceur ou radical carboné portant deux groupements Y avec A étant de structure non polymérique,

le rapport molaire Y/X étant entre 0,5 et 1,5,

le choix dudit allongeur par rapport à X étant comme suit :

- lorsque X est $NH_2$ ou OH:

    b1) soit l'allongeur de chaîne Y-A-Y correspond à :

        b1a) Y choisi parmi les groupements : maléimide, isocyanate éventuellement isocyanate bloqué, oxazinone et oxazolinone,
et

        b1b) A étant un espaceur carboné ou radical carboné, portant les fonctions ou groupements réactifs Y, A choisi parmi :

            b1ba) une liaison covalente entre deux fonctions (groupements) Y dans le cas où Y = oxazinone, oxazolinone, ou

            b1bb) une chaîne hydrocarbonée aliphatique ou une chaîne hydrocarbonée aromatique et/ou cycloaliphatique, ces deux dernières comprenant au moins un cycle de 5 ou 6 atomes de carbone, éventuellement substitué, ladite chaîne
hydrocarbonée aliphatique ayant un poids moléculaire de 14 à 200

    b2) soit l'allongeur de chaîne Y-A-Y a comme groupement Y un caprolactame et à A pouvant être un carbonyle ou A peut être un téréphtaloyle ou un isophtaloyle

    b3) soit ledit allongeur de chaîne correspond à Y étant un groupement d'anhydride cyclique et cet allongeur est choisi parmi un dianhydride carboxylique aromatique et/ou cycloaliphatique et plus préférentiellement il est choisi parmi : le dianhydride éthylènetétracarboxylique, le dianhydride pyromellitique, le dianhydride 3,3',4,4'-biphényltétracarboxylique, le dianhydride 1,4,5,8-naphtalènetétracarboxylique, le dianhydride perylènetétracarboxylique, le dianhydride 3,3',4,4'-benzophénone tétracarboxylique, le dianhydride 1,2,3,4-cyclobutanetétracarboxylique, le dianhydride hexafluoroisopropylidène bisphtalique, le dianhydride 9,9-bis(trifluorométhyl)xanthènetétracarboxylique, le dianhydride 3,3',4,4'-diphénylsulfonetétracarboxylique, le dianhydride bicyclo[2.2.2]oct-7-ène-2,3,5,6-tétracarboxylique, le dianhydride 1,2,3,4-cyclopentanetétracarboxylique, le dianhydride 3,3',4,4'-diphényl éther tétracarboxylique ou leurs mélanges,

- et lorsque X est COOH :

    b4) l'allongeur de chaîne Y-A-Y correspond à :

        b4a) Y choisi parmi les groupements : oxazoline, oxazine, imidazoline et aziridine, et à
        b4b) A étant un espaceur carboné tel que défini ci-dessus,

ii) une étape de polymérisation par (poly)addition en masse à l'état fondu, dudit prépolymère avec ledit allongeur de chaîne,

avec ledit polymère thermoplastique de ladite matrice thermoplastique étant le résultat ou le produit de ladite polymérisation par polyaddition en masse.

iii) une étape de mise en oeuvre finale dudit composite

ladite étape d'imprégnation i) étant chronologiquement séparée de celle de la polymérisation ii) et de celle de la mise en oeuvre finale iii) avec

ladite étape de mise en oeuvre iii) étant réalisée en moule ouvert par pultrusion à travers une filière chauffante.

Avantageusement, les fibres de renfort synthétiques sont longues.

Avantageusement, la température de transition vitreuse Tg est de 100 à 200°C, plus préférentiellement la température de transition vitreuse Tg est de 110 à 200°C, en particulier la température de transition vitreuse Tg est de 110 à moins de 180°C, et encore plus préférentiellement la température de transition vitreuse Tg est de 120 à 170°C.

Avantageusement, l'allongeur de chaîne Y-A-Y est le carbonyl biscaprolactame.

Avantageusement, l'aziridine est le 1, 1'-iso- ou téré- phtaloyl-bis (2-methyl aziridine).

Concernant la structure de la chaîne P dudit prépolymère, elle est oligomérique et de structure semi-cycloaliphatique et/ou semi-aromatique. Structure semi-cycloaliphatique ou à base de structure cycloaliphatique signifie que la structure comprend une structure cycloaliphatique. De manière analogue est définie une structure semi-aromatique.

Ledit allongeur de chaîne est une chaîne moléculaire hydrocarbonée de structure non polymérique, c'est-à-dire sans motifs répétitifs et donc qui n'est ni polymère ni oligomère et de préférence ayant une masse moléculaire inférieure à 500 et plus préférentiellement inférieure à 400. Dans ledit allongeur, représenté par Y-A-Y, A est un espaceur ou radical carboné portant les deux groupements (ou fonctions) Y, avec A étant de structure non polymérique, c'est-à-dire ni polymère ni oligomère.

La viscosité mentionnée à l'état fondu de l'étape i) signifie qu'elle est celle de la composition précurseur à l'état fondu à l'imprégnation.

L'imprégnation peut se réaliser à une température qui va de 150 à 340°C, de préférence de 200 à 320°C et plus particulièrement de 200 à 300°C et peut être la même que celle de polymérisation. Les conditions d'imprégnation, en particulier de température et de durée, sont contrôlées pour avoir une viscosité d'imprégnation de ladite composition précurseur ne dépassant pas 100 Pa.s et de préférence ne dépassant pas 50 Pa.s. En particulier la température d'imprégnation est contrôlée comme la durée d'imprégnation, afin d'éviter un avancement important de la réaction de polyaddition et une viscosité conséquente à l'état fondu de la composition réactive qui serait supérieure à la limite supérieure fixée ci-haut (100 Pa.s et de préférence 50 Pa.s). Le paramètre essentiel de contrôle de l'imprégnation reste la température d'imprégnation étant donné que la durée d'imprégnation dépend de la forme et taille de la pièce comme du nombre des points d'injection dans un moule.

Il est à noter que lesdites fibres synthétiques de renfort, en particulier les fibres organiques de polymère, pour jouer leur rôle de renfort, doivent par définition avoir une température de fusion Tf ou de transition vitreuse Tg', à défaut de Tf, qui est supérieure à la température de transition vitreuse Tg dudit polymère thermoplastique de la matrice et de toute manière supérieure à la température de polymérisation et supérieure à la température de mise en oeuvre, si celle-ci est supérieure à la température de polymérisation. La température de polymérisation (et de mise en oeuvre) peut aller de 150 à 340°C et de préférence de 200 à 320°C et plus préférentiellement de 200 à 300°C. Plus particulièrement, pour les fibres organiques et encore plus particulièrement pour les fibres de polymère, cette Tf" ou Tg' peut être supérieure à 350°C dans le cas où la température de polymérisation est à la valeur maximale de la 1ère plage (340°C). La Tf est mesurée par DSC, selon la norme ISO 11357, en 2ème chauffe avec une montée en température de 20°C/min. La Tg, Tg' sont également mesurées par DSC.

Plus particulièrement, l'étape d'imprégnation i), comme l'étape de polymérisation ii) de ce procédé, est réalisée avec une composition spécifique précurseur de ladite matrice thermoplastique qui est un mélange à l'état fondu, a) d'au moins un prépolymère et b) d'au moins un allongeur de chaîne comme définis ci-haut, selon l'invention.

De préférence, le procédé selon l'invention comprend également une étape iii) de mise en oeuvre finale dudit matériau composite.

Ledit prépolymère P(X)n, comme défini ci-haut, est un prépolymère dudit polymère thermoplastique final constituant la matrice thermoplastique ayant une Tg d'au moins 80°C pour le matériau composite de l'invention et comme tel, ce prépolymère comprend dans sa chaîne moléculaire P, des motifs unitaires répétitifs correspondant audit polymère thermoplastique. Par définition, la masse moléculaire dudit prépolymère est plus faible que celle du polymère thermoplastique final (de Tg d'au moins 80°C). D'autre part, ledit polymère thermoplastique final comprend une ou plusieurs unités structurales dudit allongeur de chaîne à l'état réagi, après réaction entre les fonctions Y dudit allongeur avec les fonctions X dudit prépolymère. Par exemple, dans le cas où ledit polymère est un polyamide, cela signifie que sa structure principale est un polyamide (unités répétitifs amide) résultant de l'allongement de chaîne du prépolymère polyamide P(X)n par l'intermédiaire d'un ou plusieurs allongeurs de chaîne Y-A-Y lequel a des fonctions ou groupements Y réactifs avec les fonctions ou groupements X dudit prépolymère.

Par définition de la formule P(X)n, les n groupements X sont identiques. De même, dans ledit allongeur de chaîne pouvant être représenté par Y-A-Y, les deux groupements Y sont identiques. Donc, par définition, les groupements X ne peuvent pas réagir entre eux, et de même, les groupements Y ne peuvent pas réagir entre eux. Par définition également du polymère thermoplastique de la matrice thermoplastique, ce polymère est exempt de toute structure réticulée.

Dans le procédé selon la présente invention, ledit prépolymère a une masse moléculaire moyenne en nombre Mn allant de 500 à 10000, de préférence de 1000 à 10000 g.mol$^{-1}$, plus préférentiellement de 1000 à 6000 g.mol$^{-1}$ et mieux de 2000 à 6000 g.mol$^{-1}$, mesurée par dosage des fonctions terminales X. On pourrait également parler de viscosité inhérente correspondante mesurée dans le m-crésol allant de 0,1 à 1,0, préférentiellement de 0,2 à 1,0, plus préférentiellement de 0,2 à 0,7 et mieux de 0,3 à 0,7 dl/g. Plus particulièrement, la Mn pour le prépolymère P(X)n est calculée à partir du dosage (par potentiométrie) des fonctions terminales X (concentration en meq/g de X) et de la fonctionnalité théorique n calculée dudit prépolymère (n calc) compte tenu du bilan matière et de fonctionnalité des réactants présents, avec Mn et n calc étant définis de la manière suivante :

$$Mn = n\ calc * 1000/\ [X]$$

avec

$$n\ calc = 2[X]\ /\ ([X]+[M]-[B])$$

et finalement

$$Mn = 2000\ /\ ([X] + [M] - [B])$$

où [X], [M] et [B] sont respectivement les concentrations molaires en fonctions réactives X (mesurées), en fins de chaînes non réactifs M (obtenues par exemple par calcul à partir de la quantité de réactif monofonctionnel, si introduit au chargement) et en points de branchements trifonctionnnels B (obtenus par exemple par calcul à partir de la quantité de réactif trifonctionnel si introduit au chargement), la Mn étant exprimée en g/mol et les concentrations en meq/g .

Plus particulièrement, ledit prépolymère a une masse moléculaire d'au moins environ deux fois inférieure à celle du polymère final et dans ce cas (Mn d'environ deux fois la masse moléculaire du prépolymère), ledit polymère thermoplastique final comprend deux chaînes de prépolymère P pour une molécule dudit allongeur de chaîne, chaînes de prépolymère et molécule d'allongeur étant liées entre elles par deux liaisons formées entre une fonction X et une fonction Y. Dans ce cas, la masse moléculaire dudit prépolymère est choisie dans la partie supérieure de la plage citée ci-haut, de sorte que la masse moléculaire du polymère thermoplastique final soit suffisamment élevée comme exigé par la présente invention. Plus particulièrement, la masse moléculaire moyenne en nombre visée dudit polymère thermoplastique final correspond de préférence à des valeurs de viscosité intrinsèque ou inhérente mesurées dans le m-crésol supérieures à 1 dl/g, de préférence de 1 à 3 dl/g et plus préférentiellement de 1,2 à 2 dl/g. Ces dernières plages de viscosité peuvent être considérées comme équivalentes à des masses moléculaires Mn allant de 10000 à 40000, de préférence 12000 à 30000, qui peuvent être mesurées par titration des fonctions terminales et la fonctionnalité.

Selon un mode plus particulier et préféré de ce procédé, ledit prépolymère porte deux fonctions réactives X (identiques), avec n = 2 dans P(X)n, et lesdites fonctions Y de l'allongeur réagissent avec les deux fonctions X dudit prépolymère, ceci correspondant à un allongement de chaîne par polyaddition et qui signifie une addition répétée plusieurs fois. Pour atteindre les masses moléculaires élevées pour le polymère thermoplastique final selon l'invention, il faut ajuster le rapport molaire Y/X en fonction de la masse Mn ou viscosité intrinsèque visée. Ce rapport peut varier entre 0,5 et 1,5 en sachant que plus ce rapport est proche de 1, plus la masse Mn ou la viscosité intrinsèque sera élevée.

L'étape d'imprégnation i) est généralement réalisée à une température supérieure à la température de fusion ou à défaut de fusion, à une température supérieure à la température de transition vitreuse dudit prépolymère P(X)n et éventuellement de son mélange avec ledit allongeur de chaîne, pouvant être représenté par Y-A-Y. Cette température d'imprégnation de l'étape i) est ajustée de manière telle que la viscosité à l'état fondu (en masse) de ladite composition précurseur ne dépasse pas, lors de l'imprégnation, 100 Pa.s et de préférence ne dépasse pas 50 Pa.s. Cette étape i) peut être mise en oeuvre sous une pression allant de 1 à 30 bars, de préférence de 1 à 10 bars.

Concernant l'étape de polymérisation ii), elle peut être mise en oeuvre à une température allant de 150 à 340°C, de préférence de 200 à 320°C et plus préférentiellement de 200 à 300°C.

La température de mise en oeuvre de l'étape iii) peut se situer dans la plage de la température de polymérisation, comme indiquée ci-dessus, pouvant être identique à celle de polymérisation.

Selon un mode préféré du procédé de l'invention tel que décrit ci-haut, le polymère thermoplastique est choisi parmi : un polyamide, un polyester, leurs copolymères, par exemple copolymère polyamide-polyéther ou leurs mélanges, et de préférence ce polymère thermoplastique est un polyamide. Cette définition préférée du polymère thermoplastique conduit implicitement au choix préféré dudit prépolymère réactif P(X)n parmi les prépolymères réactifs : polyamide et copolymères, y compris polyamide-polyéther, polyesters et copolymères ou leurs mélanges entre polyamides et polyesters et de leur copolymères.

Concernant les fonctions réactives X préférées portées par ledit prépolymère, elles sont choisies parmi : hydroxyle (OH), amine ($NH_2$) ou carboxy (COOH), plus préférentiellement amine ou carboxy. L'amine symbolisée par $NH_2$ couvre à la fois une amine primaire et secondaire. Dans les cas où l'amine primaire peut réagir dans le système prépolymère/allongeur (par exemple si bismaléimide) avec ses deux N-H, les proportions et mode d'addition des deux réactants sont contrôlés de sorte à éviter toute réticulation, l'objectif de l'invention étant d'obtenir une matrice thermoplastique et recyclable par chauffage du polymère au delà de son point de fusion (si semi-cristallin) ou au delà de sa température de transition vitreuse s'il est amorphe.

D'une manière générale, quand la fonctionnalité de l'un des deux réactants est supérieure à 2, afin d'éviter toute réticulation potentielle, la fonctionnalité moyenne par réactant (prépolymère + allongeur de chaîne confondus), ce qui signifie le nombre total de fonctions réactives X + Y, divisé par le nombre total de moles de prépolymère + allongeur de chaîne, ne doit pas dépasser 2. Plus particulièrement, la relation de Macosko-Miller bien connue de l'homme du métier, reliant les proportions des réactants, leur fonctionnalité et le taux de conversion peut être utilisée dans ce contexte.

Donc, par définition il est exclu toute présence de polymère réticulé dans la matrice polymère thermoplastique final du composite selon l'invention.

Le polymère thermoplastique a une température de transition vitreuse Tg d'au moins 80°C, de préférence allant de 100 à 200°C, plus préférentiellement de 110 à 200°C, et encore plus préférentiellement de 110 à moins de 180°C et plus particulièrement de 120 à 170°C. La Tg (comme Tg') est mesurée par DSC après 2$^{\text{ème}}$ passage à une vitesse de chauffage de 20°C/min. Il est intéressant d'atteindre une température de transition vitreuse élevée (haute) comme définie ci-haut pour que les pièces composites fabriquées selon l'invention soient capables de résister mécaniquement quand elles sont sollicitées, en particulier à une température élevée. Plus particulièrement, elles doivent tenir à une température allant jusqu'à 90°C et de préférence jusqu'à 100°C, sans trop affecter la tenue mécanique (en particulier le module et la contrainte à la rupture) avec maintien d'une tenue mécanique élevée (module et contrainte à la rupture) comme cela doit être le cas pour les pièces mécaniques utilisées dans l'industrie automobile ou aéronautique, et de préférence sans chute de ces performances supérieure à 30%, en particulier d'au plus 25% par rapport aux performances à l'ambiante (23°C).

Pour atteindre de telles températures de transition vitreuse, on utilise de préférence un polymère thermoplastique à base de structures aromatiques et/ou cycloaliphatiques, c'est-à-dire comprenant des structures aromatiques et/ou cycloaliphatiques et plus particulièrement comportant (ayant) au moins 25% en moles de ses motifs comprenant des structures aromatiques et/ou cycloaliphatiques. On parlera dans ce cas, selon cette définition de la présente invention, de polymère thermoplastique « à base de structure aromatique et/ou cycloaliphatique » (c'est-à-dire comprenant une structure aromatique et/ou cycloaliphatique) ou de polymère « à base de structure aromatique » ou de polymère « à base de structure cycloaliphatique » en fonction du cas. On utilisera parfois le terme (équivalent) de polymère « semi-aromatique » ou « semi cycloaliphatique » avec la même signification pour la présente invention. Cette définition est également valable pour le prépolymère P(X)n de la présente invention, lequel est par définition un prépolymère dudit polymère thermoplastique de la matrice thermoplastique du composite selon l'invention.

Ledit prépolymère P(X)n correspond à n, X et P comme suit :

- n = 1 ou 2, plus préférentiellement n = 2
- X est une fonction réactive choisie parmi : OH, $NH_2$ ou COOH, de préférence amine ($NH_2$) ou carboxy (COOH)
- ladite chaîne P, chaîne moléculaire hydrocarbonée, comprenant une structure cycloaliphatique et/ou aromatique (ou également pouvant être définie comme expliqué plus haut, comme de structure semi-cycloaliphatique et/ou semi-aromatique) en particulier comprenant au moins un cycle de 4, 5 ou 6 atomes de carbone, éventuellement substitué. Cela signifie, que la chaîne moléculaire P dudit prépolymère a ou comprend un motif répétitif de structure cycloaliphatique et/ou aromatique, et en particulier comporte au moins un cycle de 4, 5 ou 6 atomes de carbone, éventuellement substitué.

Le polymère thermoplastique (de la matrice thermoplastique) est choisi parmi : un polyamide, un polyester, leurs copolymères, par exemple copolymère polyamide-polyéther ou leurs mélanges, et de préférence le polymère thermoplastique est un polyamide.

Le prépolymère P(X)n peut être choisi parmi un prépolymère de polyamide, un prépolymère de copolyamide, un prépolymère de polyester, un prépolymère de copolyester, un prépolymère de copolymère polyamide-polyéther, un prépolymère de copolymère polyamide-polyester ou leurs mélanges (mélanges de prépolymères).

Plus particulièrement, le polymère thermoplastique de la matrice thermoplastique, comme le prépolymère P(X)n correspondant utilisé selon l'invention, est de structure semi-aromatique et/ou semi-cycloaliphatique.

Dans le procédé de la présente invention, comme décrit ci-haut, un prépolymère préféré est un prépolymère de polyamide P(X)n, de préférence à base de (ou comprenant une) structure aromatique et/ou cycloaliphatique (ou aussi désignée semi-aromatique et/ou semi-cycloaliphatique), obtenu à partir de :

- la polycondensation d'au moins une diamine aliphatique linéaire ou ramifiée et d'au moins un acide dicarboxylique aromatique et/ou cycloaliphatique comportant au moins un cycle à 4, 5 ou 6 atomes de carbone éventuellement substitué, et/ou

- la polycondensation d'au moins une diamine cycloaliphatique avec au moins un acide dicarboxylique aliphatique linéaire ou ramifié, cycloaliphatique ou aromatique,
- et éventuellement, avec présence d'au moins un composé choisi parmi : un lactame, un acide aminocarboxylique ou la combinaison stoechiométrique d'un diacide carboxylique aliphatique et d'une diamine aliphatique.

Plus particulièrement, comme exemple convenable de prépolymère de polyamide (ou de copolyamide) répondant à la formule P(X)n définie ci-dessus, on peut citer les cas décrits ci-après :

Un prépolymère de polyamide (ou de copolyamide) à fonctions réactives $X = NH_2$, à base de structure aromatique et/ou cycloaliphatique, lequel remplit les caractéristiques de Tg selon la présente invention et qui peut être obtenu par exemple à partir de :

- diacides aromatiques tels qu'acides iso- et téréphtalique, acides naphtalènes (en position 2, 6 ou 1, 5 ou 2, 7) dicarboxyliques, 4,4'-dicarboxydiphényléther, 4,4'-dicarboxybiphényle, furane dicarboxylique
- diacides aliphatiques, par exemple en $C_4$ à $C_{24}$ linéaires ou ramifiés tels qu'acides adipique, sébacique, dodécane-1,12-dioïque, sous condition de présence de diamine cycloaliphatique ou de diacide aromatique ou cycloaliphatique
- diacides cycloaliphatiques tels qu'acide cyclohexane-1,4-dicarboxylique, cyclohexane-1,3-dicarboxylique, cyclobutane-1,3-dicarboxylique,
- diamines cycloaliphatiques, par exemple la bis (3,3'-méthyl-4,4'-amino-cyclohexyl)méthane, la bis (4,4'-amino-cyclohexyl)méthane, l'isophorone diamine, les bis(3,5-dialkyl-4-aminocyclohexyl)méthane, les bis(3,5-dialkyl-4-aminocyclohexyl)éthane, la bis(3,5-dialkyl-4-aminocyclohexyl)-propane, la 2,2-bis(3-méthyl-4-aminocyclohexyl)propane(BMACP), l'isopropylidene di(cyclohexylamine) (PACP), la 2,6-bis(amino méthyl)norbornane (BAMN),
- diamines aliphatiques, par exemple en $C_2$ à $C_{24}$ linéaires ou ramifiés, telles que l'hexaméthylène-1,6-diamine, la nonaméthylène-1,19-diamine, la décaméthylène-1,10-diamine, la dodécaméthylène-1,12-diamine, sous condition de présence de diacides (ou de dianhydrides) carboxyliques aromatiques et éventuellement cycloaliphatiques ou de diamines cycloaliphatiques,
- lactames, par exemple en $C_5$ à $C_{14}$ tels que les caprolactame, dodécalactame, sous condition de présence d'autres co-réactants aromatiques et éventuellement cycloaliphatiques,
- aminoacides, par exemple en $C_5$ à $C_{14}$ tels que l'acide 11-aminoundécanoïque, sous condition de présence d'autres co-réactants aromatiques et éventuellement cycloaliphatiques,

dans un rapport [COOH]/[NH2], tel que nécessaire pour avoir un excès d'amine, cet excès pouvant être ajusté en fonction de la Mn visée pour ledit prépolymère.

Un prépolymère de polyamide (ou de copolyamide) à fonctions réactives X = COOH de même structure que le précédent (à base de structure aromatique et/ou cycloaliphatique), lequel remplit les caractéristiques de Tg selon la présente invention, peut être obtenu à partir des mêmes composants comme cités ci-haut pour le prépolymère avec $X = NH_2$, avec comme différence l'utilisation ici d'un excès de COOH par rapport à $NH_2$.

Comme exemple plus détaillé de prépolymère polyamide carboxylé convenable pour l'invention, on peut citer l'oligoamide dicarboxylé cité sous référence V dans la demande EP 0 581 642 de la demanderesse, de Mn 3000, obtenu à partir d'acide téréphtalique (T), isophtalique (I) de lactame 12 (L12) et de bis(3,3'-méthyl-4,4' amino cyclohexyl) méthane (BMACM) dans des proportions molaires : T/I/L12/BMACM : 3,6/2,4/5/5.

De tels prépolymères carboxylés conviennent pour la polymérisation selon l'invention avec des allongeurs de chaîne tels que décrits dans la même demande sous références citées A pour bisoxazolines et références B, C et D pour bisoxazines ou décrits dans la demande EP 0 739 924 de la demanderesse sous références A à F pour des bisimidazolines.

Pour l'obtention d'un prépolymère polyamide à fonctions $X = NH_2$, il suffit d'avoir un excès de fonctions amine par rapport aux fonctions acides carboxy avec les mêmes composants que ceux précités. Comme exemple plus précis d'un tel prépolymère, on peut prendre l'oligoamide cité sous référence IV (à base de structure aromatique ou semi-aromatique) à la page 9 de la demande EP 0 581 641 de la demanderesse avec les proportions molaires T/I/L12/BMACM : 3/2/2,5/6.

Pour l'obtention de prépolymères polyamides avec des fonctions terminales X = hydroxy (OH), il est possible de modifier les fonctions terminales X = carboxy d'un prépolymère polyamide tel que précité, par réaction des fonctions terminales carboxy avec un excès de diol. Pour obtenir un prépolymère avec une fonctionnalité n = 1, un co-réactant mono fonctionnel (monoamine ou monoacide) peut être utilisé comme co-réactant pour bloquer une extrémité de la chaîne.

De tels prépolymères aminés ou hydroxylés conviennent pour la polymérisation selon l'invention avec des allongeurs de chaîne tels que décrits dans la demande EP 0 581 641 sous références A et B (page 7) pour les bisoxazolinones et sous références C et D pour les bisoxazinones (page 8).

Lorsque le prépolymère est un prépolymère de polyester ou copolyester, ce dernier est de préférence obtenu à partir de :

- diacides et/ou d'anhydrides carboxyliques ou diesters, aromatiques et/ou cycloaliphatiques tels que décrits ci-haut, et de
- diols cycloaliphatiques, comme le cyclohexane diol
- diols aliphatiques, tels que : éthylène glycol, propylène glycol, butane-1,4-diol, pentane-1,5-diol, hexane-1,6-diol, diéthylène glycol, triéthylène glycol,
- diacides et/ou anhydrides carboxyliques aliphatiques comme décrits ci-haut, sous condition de présence de diacides et/ou anhydrides carboxyliques et/ou diesters aromatiques et éventuellement cycloaliphatiques et de diols cycloaliphatiques.

Pour obtenir pour ces prépolymères polyesters, une fonction terminale X = carboxy (COOH), on peut utiliser un excès de fonctions carboxy par rapport à OH. Pour obtenir une fonction terminale X = OH, on utilise un excès des fonctions OH par rapport aux carboxy. L'excès est ajusté en fonction de la masse Mn visée.

Pour obtenir un prépolymère P(X)n, avec n = 3, par exemple un polyamide avec X = amine, il faut, par exemple, avoir dans le mélange réactionnel une amine trifonctionnelle en plus des composants bifonctionnels diamine et diacide ou lactame.

Plus particulièrement, comme prépolymère de polyester ou copolyester répondant à la formule P(X)n définie ci-dessus, on peut citer :

- un prépolymère de polyester (ou de copolyester) à fonctions réactives X = OH, de structure semi-aromatique, obtenu à partir de diacide et/ou d'anhydride d'acide et/ou de diester aromatique et d'un excès de diol, avec le diol étant aliphatique en $C_2$ à $C_{24}$ linéaire ou ramifié, tel qu'éthylène glycol, propylène glycol, butane-1,4-diol, pentane-1,5-diol, hexane-1,6-diol, diéthylène glycol, triéthylène glycol, et ledit diacide et/ou anhydride d'acide et/ou diester aromatique et éventuellement cycloaliphatique, étant choisi par exemple parmi les acides/anhydrides téréphtalique, isophtalique, tétrahydrophtalique et le diester aromatique parmi le diméthyltéréphtalate ou diméthylisophtalate,
- un prépolymère de polyester (ou de copolyester) à fonctions réactives X = COOH, de structure semi-aromatique, peut être obtenu par exemple à partir de diacide et/ou d'anhydride d'acide en excès, tels que l'anhydride phtalique, et ceux cités précédemment, et de diol, tel que diol aliphatique en $C_2$ à $C_{24}$ linéaire ou ramifié, par exemple éthylène glycol, propylène glycol, butane -1,4-diol, pentane -1-5-diol, hexane-1,6-diol, diéthylène glycol, triéthylène glycol.

Comme exemple de prépolymère P(X)n à base de copolymère polyamide-polyéther, on peut citer un copolymère séquencé polyamide-polyéther et plus particulièrement triséquencé polyamide-polyéther-polyamide porteur de fonctions X = COOH, qui peut être obtenu par réaction d'un oligomère polyamide avec X = COOH et qui réagit avec un oligomère polyéther à terminaisons hydroxy (OH), ledit polyamide étant en excès et dans un ratio proche de 2 carboxy pour 1 OH (2 chaînes polyamides pour 1 de polyéther). Un prépolymère P(X)n analogue mais avec un polyester à la place du polyamide est possible en remplaçant le polyamide carboxylé par un polyester carboxylé.

De manière équivalente, le prépolymère P(X)n convenable pour l'invention présente avantageusement une viscosité à l'état fondu telle qu'en mélange avec ledit allongeur dans ladite composition précurseur, la viscosité à l'état fondu reste inférieure à 100 Pa.s, de préférence inférieure ou égale à 50 Pa.s, à la température d'imprégnation desdites fibres.

La viscosité du mélange comprenant le prépolymère et l'allongeur de chaîne à l'état fondu ou la viscosité à l'état fondu de la composition précurseur, dans les conditions d'imprégnation dudit assemblage de fibres, reste dans la plage indiquée ci-haut. La température d'imprégnation est généralement supérieure à la température de fusion et à défaut de température de fusion, supérieure à la température de transition vitreuse dudit prépolymère et dudit allongeur de chaîne.

De telles gammes de masse moléculaires et/ou de viscosité sont choisies pour obtenir une imprégnation optimale des fibres de renfort synthétiques.

Plus particulièrement, quand Y est choisi parmi oxazinone, oxazolinone, oxazine, oxazoline ou imidazoline, dans ce cas, dans l'allongeur de chaîne représenté par Y-A-Y, A peut représenter un alkylène, tel que $-(CH_2)_m-$ avec m allant de 1 à 14 et de préférence de 2 à 10 ou A peut aussi représenter un cycloalkylène et/ou un arylène substitué (alkyle) ou non substitué, comme les arylènes benzéniques, tels que les phénylènes o-, m-, -p ou les arylènes naphtaléniques, et de préférence A est un arylène et/ou un cycloalkylène.

Dans le cas du carbonyl- ou térephtaloyl- ou isophtaloyl- biscaprolactame comme allongeur de chaîne Y-A-Y, les conditions préférées évitent l'élimination de sous produit, comme le caprolactame lors de ladite polymérisation et mise en oeuvre à l'état fondu.

Dans le cas éventuel cité ci-haut où Y représente une fonction isocyanate bloqué, ce blocage peut être obtenu par des agents bloquants de la fonction isocyanate, comme la epsilon-caprolactame, la méthyl éthyl kétoxime, la diméthyl pyrazole, le di éthyl malonate.

De même, dans le cas où l'allongeur est un dianhydride réagissant avec un prépolymère P(X)n où X = NH$_2$, les conditions préférées évitent toute formation de cycle imide lors de la polymérisation et lors la mise en oeuvre à l'état fondu.

Pour X = OH ou NH$_2$, le groupement Y est choisi de préférence parmi : isocyanate (non bloqué), oxazinone et oxazolinone, plus préférentiellement oxazinone et oxazolinone, avec comme espaceur (radical) A étant comme défini ci-haut.

Comme exemples d'allongeurs de chaîne avec des fonctions réactives Y oxazoline ou oxazine, convenables à la mise en oeuvre du procédé selon l'invention, on pourra se référer à ceux décrits sous références A, B, C et D à la page 7 de la demande EP 0 581 642 de la Demanderesse ainsi qu'à leurs procédés de préparation et leur mode de réaction qui y sont exposés. A est la bisoxazoline, B la bisoxazine, C la 1,3 phénylène bisoxazoline et D la 1,4-phénylène bisoxazoline.

Comme exemples d'allongeurs de chaîne à fonction réactive Y imidazoline convenables à la mise en oeuvre du procédé selon l'invention, on pourra se référer à ceux décrits (A à F) à la page 7 à 8 et tableau 1 de la page 10, dans la demande EP 0 739 924 de la Demanderesse ainsi qu'à leurs procédés de préparation et leur mode de réaction qui y sont exposés.

Comme exemples d'allongeurs de chaîne à fonction réactive Y = oxazinone ou oxazolinone qui conviennent à la mise en oeuvre du procédé selon l'invention, on peut se référer à ceux décrits sous références A à D à la page 7 à 8 de la demande EP 0 581 641 de la Demanderesse ainsi qu'à leurs procédés de préparation et modes de réaction qui y sont exposés.

Comme exemples de groupements Y oxazinones (cycle à 6 atomes) et oxazolinones (cycle à 5 atomes) convenables, on peut citer les groupements Y dérivés de : benzoxazinone d'oxazinone ou d'oxazolinone, avec comme espaceur A pouvant être une simple liaison covalente avec pour allongeurs correspondants respectifs étant : bis (benzoxazinone), bisoxazinone et bisoxazolinone.

A peut être également un alkylène en C$_1$ à C$_{14}$, de préférence en C$_2$ à C$_{10}$ mais de préférence A est un arylène et, plus particulièrement, il peut être un phénylène (1,2 ou 1,3 ou 1,4 substitué par Y) ou un radical naphtalène (disubstitué par Y) ou un phtaloyle (iso- ou téréphtaloyle) ou A peut être un cycloalkylène.

Pour les fonctions Y comme oxazine (cycle à 6), oxazoline (cycle à 5) et imidazoline(cycle à 5), le radical A peut être comme décrit ci-haut avec A pouvant être une simple liaison covalente et avec les allongeurs correspondants respectifs étant : bisoxazine, bisoxazoline et bisimidazoline. A peut être également un alkylène en C$_1$ à C$_{14}$, de préférence en C$_2$ à C$_{10}$. Le radical A est de préférence un arylène et, plus particulièrement, il peut être un phénylène (1,2 ou 1,3 ou 1,4 substitué par Y) ou un radical naphtalène (disubstitué par Y) ou un phtaloyle (iso- ou téréphtaloyle) ou A peut être un cycloalkylène.

Dans le cas où Y = aziridine (hétérocycle azoté à 3 atomes équivalent à l'oxyde d'éthylène en remplaçant l'éther -O- par -NH-), le radical A peut être un phtaloyle (1,1'iso- ou téré- phtaloyle) avec comme exemple d'allongeur la 1,1' isophtaloyl-bis(2-méthyl aziridine).

La présence d'un catalyseur de la réaction entre le prépolymère P(X)n et l'allongeur Y-A-Y à un taux allant de 0,001 à 2% de préférence de 0,01 à 0,5% par rapport au poids total de deux co-réactants cités, peut accélérer la réaction de (poly)addition et ainsi raccourcir le cycle de production. Un tel catalyseur peut être choisi parmi : 4,4' diméthyl aminopyridine, l'acide p-toluène sulfonique, acide phosphorique, NaOH et éventuellement ceux décrits pour une polycondensation ou transestérification comme décrits dans EP 0 425 341, page 9, lignes 1 à 7.

Selon un cas plus particulier du cas précédent dans le choix dudit allongeur, A peut représenter un alkylène tel que -(CH$_2$)$_m$- avec m allant de 1 à 14 et de préférence de 2 à 10 ou représente un arylène substitué alkyle ou non substitué, comme les arylènes benzéniques (comme les phénylènes o-, m-, -p) ou naphtaléniques (avec arylènes : naphtalenylènes). De préférence, A représente un arylène qui peut être benzénique ou naphténique substitué ou non.

Selon un choix plus sélectif du procédé selon l'invention comme décrit ci-haut, ledit polymère thermoplastique est un polyamide semi-aromatique (à base de structure aromatique) et/ou semi-cycloaliphatique (à base de structure cycloaliphatique), de préférence semi-aromatique (à base de structure aromatique), homopolyamide (homopolymère) ou copolyamide (copolymère de polyamide), plus particulièrement correspondant à l'une des formules suivantes :

- polyamides parmi : 8.T, 9.T, 10.T, 11.T, 12.T, 6.T/9.T, 9.T/10.T, 9.T/11.T, 9.T/12.T, 9/6.T, 10/6.T, 11/6.T, 12/6.T, 10/9.T, 10/10.T, 10/11.T, 10/12.T, 11/9.T, 11/10.T, 11/11.T, 11/12.T, 12/9.T, 12/10.T, 12/11.T, 12/12.T, 6.10/6.T, 6.12/6.T, 9.10/6.T, 9.12/6.T, 10.10/6.T, 10.12/6.T, 6.10/9.T, 6.12/9.T, 9.10/9.T, 9.12/9.T, 10.10/9.T 10.12/9.T, 6.10/10.T, 6.12/10.T, 9.10/10.T, 9.12/10.T, 10.10/10.T, 10.12/10.T, 6.10/12.T, 6.12/12.T, 9.10/12.T, 9.12/12.T, 10.10/12.T, 11/6.T/9.T, 11/6.T/10.T, 11/6.T/11.T, 11/6.T/12.T, 11/9.T/10.T, 11/9.T/11.T, 11/9.T/12.T, 11/10.T/11.T, 11/10.T/12.T, 11/11.T/12.T, 6.T/10.T, 6.T/11.T, 6.T/12.T, 10.T/11.T, 10.T/12.T, 11.T/12.T, 12/6.T/10.T, 12/6.T/11.T, 12/6.T/12.T, 12/9.T/10.T, 12/9.T/11.T, 12/9.T/12.T, 12/10.T/11.T, 12/10.T/12.T, 12/11.T/12.T,
- polyamides terpolymères précédents avec 12/ remplacé par 9/, 10/, 6.10/, 6.12/, 10.10/, 10.12/, 9.10/ et 9.12/,

- tous les polyamides cités ci-haut où le téréphtalique (T) est remplacé partiellement ou totalement par l'isophtalique (I), le naphtalène 2,6 dicarboxylique et/ou par le 1,3 ou le 1,4 CHDA (acide cyclohexane dicarboxylique), avec tout ou partie des diamines aliphatiques pouvant être remplacées par des diamines cycloaliphatiques,
- tous les polyamides cités ci-haut, avec remplacement de la diamine aliphatique en $C_6$ à $C_{12}$ par une diamine cycloaliphatique parmi BMACM, BACM et/ou IPDA et avec remplacement de tout ou partie du diacide aromatique T, par un diacide aliphatique linéaire ou ramifié en $C_6$ à $C_{18}$.

Le terme « correspondant à l'une des formules suivantes » signifie que le polymère thermoplastique final polyamide qui résulte de la polymérisation par (poly)addition en masse entre ledit prépolymère polyamide et ledit allongeur de ladite composition précurseur selon l'invention définie ci-haut, a les mêmes motifs (unitaires) répétitifs principaux que ledit prépolymère, en fait ceux du polyamide correspondant cité, malgré l'incorporation dans la chaîne du polymère final d'un nombre limité de motifs, issus de l'allongeur (motifs d'allongement ou de liaison entre chaînes dudit prépolymère).

Plus particulièrement, le polymère thermoplastique dans le procédé de l'invention est un polyamide semi-cristallin ayant une température de fusion Tf et une température de cristallisation Tc. Ces températures, comme les températures de transition vitreuse, sont mesurées par DSC avec Tf et Tc mesurées selon la norme ISO 11357-3.

Ledit polymère thermoplastique peut être amorphe ou semi cristallin. Plus particulièrement, ledit polymère est un polyamide amorphe ou semi-cristallin. Selon un mode particulier de l'invention, il est semi-cristallin.

Dans la liste précédente de polyamides à base de structure aromatique et/ou cycloaliphatique, on peut passer d'un polyamide amorphe à un polyamide semi-cristallin sans affecter la Tg en réduisant la teneur en moles des motifs comprenant des diacides isophtaliques, 1,3 CHDA et de diamines cycloaliphatiques et en augmentant la teneur en diacides téréphtaliques, 2,6 naphtalène dicarboxylique et 1,4 CHDA.

Comme exemple général de polyamide semi cristallin, on peut citer un polyamide basé sur une structure d'acide téréphtalique combinée avec une diamine aliphatique par exemple en $C_{10}$ ou en $C_6$. L'ajout de structure isophtalique ou 1,3 CHDA permet de réduire la Tf (cristallinité) sans affecter la Tg. La Tg peut être réglée par la présence de diamines cycloaliphatiques ou aryl aliphatiques pour l'augmenter ou d'aminoacides, de diacides aliphatiques et de diamines aliphatiques pour la réduire. La Tf peut être ajustée par le choix du motif cristallin (10T ou 6T) et ensuite par copolymérisation. En général, plus il y a de motifs aromatiques et éventuellement cycloaliphatiques, plus la Tg sera élevée, comme le sera la Tf dans le cas d'un polymère semi-cristallin.

Plus particulièrement, la Tf dudit polymère thermoplastique se situe dans une plage allant de 200 à 320°C, de préférence de 200 à 300°C et plus préférentiellement de 240 à 300°C. L'avantage d'utiliser un polymère thermoplastique semi-cristallin réside dans le fait que les zones cristallines dans la zone amorphe de ce polymère renforcent le domaine amorphe du polymère et améliorent la tenue mécanique à chaud, en particulier la contrainte à la rupture et notamment la résistance au fluage.

Plus précisément, dans le cas préféré où ledit polymère thermoplastique est un polyamide semi-cristallin, il a une température de fusion Tf et une température de cristallisation Tc. Dans ce cas, l'écart entre la température de fusion Tf dudit polyamide et sa température de cristallisation Tc est en particulier inférieur à 100°C, de préférence inférieur ou égal à 80°C et plus préférentiellement inférieur à 50°C. Le choix d'un tel polymère thermoplastique permet de faciliter le démoulage du matériau composite à une température inférieure à Tc (en refroidissant à cette température).

Le polymère thermoplastique peut également être amorphe et, plus particulièrement, il peut être un polyamide amorphe. Dans ce cas, il peut être choisi par exemple, parmi les polyamides basés sur une structure dérivée de diamine cycloaliphatique ou aryl aliphatique en combinaison avec un diacide aliphatique ou d'acide isophtalique en combinaison avec une diamine aliphatique. La Tg est augmentée par la présence d'isophtalique et cycloaliphatique et réduite par la présence de motifs aliphatiques. Comme exemples de polyamides amorphes convenables à l'invention, on peut citer les polyamides précédents où le téréphtalique (T) est remplacé par l'isophtalique (I) comme acide dans la structure du polyamide jusqu'à disparition du point de fusion.

Comme exemples de polyamides amorphes convenables (amorphe signifie la disparition du point de fusion mesurable par DSC) pour le procédé de l'invention, on peut citer par exemple des homopolyamides ou des copolyamides répondant par exemple à l'une des formules suivantes :

- BMACM.T, BMACM.I, BMACM.6, BMACM.10, BMACM.12, BMACM.14, BMACM. 1,4 CHDA ou en remplaçant dans ces formules tout ou partie de la BMACM par IPDA ou des combinaisons de ces compositions et/ou avec ajout de structures, 11, 12, 6.10, 6.12, 9.10, 9.12, 10.10, 10.12,

avec :

BMACM : bis(3-méthyl, 4-amino cyclohexyl) méthane
BACM : bis (amino cyclohexyl)méthane

IPDA : isophorone diamine.

Lorsque le polymère thermoplastique est un mélange de polymères thermoplastiques, par exemple de polyamide et de polyester, il est préférable, pour assurer une bonne tenue mécanique du matériau, que les polymères impliqués, par exemple le polyamide et le polyester, soient compatibles. D'une façon générale, deux polymères sont dits « compatibles » s'il est possible de les mélanger de façon à obtenir une matière présentant une tenue mécanique homogène avec une température de transition vitreuse Tg du mélange qui est une Tg intermédiaire par rapport aux deux Tg respectives, ladite Tg intermédiaire étant calculable à partir de la relation de Fox.

Au sens de l'invention, un « mélange » de polyamide et de polyester peut bien sûr s'entendre d'un mélange de copolymère polyamide-polyester et de polyamide ou encore d'un mélange de copolymère polyamide-polyester et de polyester. La présence d'un copolymère à base de deux polymères candidats au mélange est parfois nécessaire pour remédier au problème de compatibilité entre les deux polymères candidats au mélange.

Conformément au procédé de fabrication du matériau composite selon l'invention, le polymère thermoplastique imprégnant ledit assemblage de fibres de renfort est formé au cours de l'étape de polymérisation ii) par réaction d'addition en masse dans la composition précurseur, comprenant a) un prépolymère du polymère thermoplastique avec b) un allongeur de chaîne comme définis ci-haut selon l'invention. Le polymère thermoplastique de la matrice finie (finale) correspond à celui obtenu, dans le cas où la réaction de polymérisation de l'étape ii) est complète et non partielle, par exemple il correspond au polymère obtenu après la mise en oeuvre finale du matériau composite par moulage en l'étape iii) et si nécessaire après une étape éventuelle de recuit.

Concernant les fibres de renfort synthétiques impliquées dans le procédé de l'invention décrit ci-haut, elles sont de préférence de fibres longues ce qui signifie, selon l'invention, ayant un facteur de forme > 1000 (c'est-à-dire ratio de longueur sur diamètre de la fibre). Elles peuvent être continues, comme les tissus (2D), les nappes, les bandes ou les tresses, comme les non tissés ou comme les renforts unidirectionnels (UD). Elles peuvent également être coupées par exemple sous forme de non tissés (mats) ou sous forme de feutres.

Ces fibres de renfort synthétiques peuvent être choisies parmi :

- les fibres minérales, celles-ci ayant des températures de fusion Tf élevées et supérieures à la Tg dudit polymère (dans le cas d'un amorphe) ou supérieure à la température de fusion Tf (cas d'un semi-cristallin) et supérieures à la température de polymérisation et de mise en oeuvre. Elles peuvent aller jusqu'à 2050°C,
- les fibres polymériques ou de polymère, sous condition d'avoir une température de fusion Tf' ou, à défaut de Tf', une température de transition vitreuse Tg', supérieure à la température de polymérisation (i.e. supérieure à la Tg de la matrice du composite, si elle est amorphe ou supérieure à la température de fusion Tf de cette matrice, si elle est semi-cristalline et supérieure à la température de mise en oeuvre). De préférence, Tf' est supérieure à 350°C dans le cas où la température de polymérisation se situe dans la limite supérieure de la plage citée ci-haut correspondant à 340°C,
- ou les mélanges des fibres citées ci-haut.

Comme fibres minérales convenables pour l'invention, on peut citer les fibres de carbone, ce qui inclut les fibres de nanotubes de carbone (NTC), les nanofibres de carbone ou les graphènes ; les fibres de silice comme les fibres de verre, notamment de type E, R ou S2 ; les fibres de bore ; les fibres céramiques, notamment fibres de carbure de silicium, fibres de carbure de bore, fibres de carbonitrure de bore, fibres de nitrure de silicium, fibres de nitrure de bore, les fibres de basalte ; les fibres ou filaments à base de métaux et/ou de leurs alliages ; les fibres des oxydes métalliques, notamment d'alumine ($Al_2O_3$) ; les fibres métallisées comme les fibres de verre métallisées et les fibres de carbone métallisées ou les mélanges des fibres précitées.

Plus particulièrement, ces fibres synthétiques peuvent être choisies comme suit :

- les fibres minérales peuvent être choisies parmi : les fibres de carbone, les fibres de nanotubes de carbone, fibres de verre, notamment de type E, R ou S2, fibres de bore, fibres céramiques, notamment fibres de carbure de silicium, fibres de carbure de bore, fibres de carbonitrure de bore, fibres de nitrure de silicium, fibres de nitrure de bore, fibres de basalte, fibres ou filaments à base de métaux et/ou leurs alliages, fibres à base d'oxydes métalliques comme $Al_2O_3$, les fibres métallisées comme les fibres de verre métallisées et les fibres de carbone métallisées ou les mélanges des fibres précitées, et
- les fibres de polymère ou polymériques, sous condition précitée ci-haut, sont choisies parmi :

  ■ les fibres de polymères thermodurcissables et plus particulièrement choisies parmi : les polyesters insaturés, les résines époxy, les esters vinyliques, les résines phénoliques, les polyuréthanes, les cyanoacrylates et les polyimides, tels que les résines bismaléimide, les aminoplastes résultant de la réaction d'une amine telle que la mélamine avec un aldéhyde tel que le glyoxal ou le formaldéhyde

- les fibres de polymères thermoplastiques et plus particulièrement choisies parmi : le polyéthylène téréphtalate (PET), le polybutylène téréphtalate (PBT), les polyoléfines haute densité telles que le polyéthylène (PET), le polypropylène (PP) et les copolymères PET/PP, PVOH (polyvinyl alcool)
  - les fibres de polyamides répondant à l'une des formules : 6, 11, 12, 6.10, 6.12, 6.6, 4.6,
  - les fibres d'aramides (comme le Kevlar®) et polyamides aromatiques tels que ceux répondant à l'une des formules : PPD.T, MPD.I, PAA et PPA, avec PPD et MPD étant respectivement la p- et m-phénylène diamine, PAA étant les polyarylamides et PPA étant les polyphtalamides
  - les fibres de copolymères blocs de polyamide tels que le polyamide/polyéther, les fibres de polyaryléthers cétones (PAEK) telle que la polyétheréther cétone (PEEK), la polyéthercétone cétone (PEKK), la polyéthercétoneéthercétone cétone (PEKEKK).

Les fibres de renfort synthétiques préférées sont des fibres longues et choisies parmi les : fibres de carbone, y compris métallisées, fibres de verre, y compris métallisées de type E, R, S2, fibres d'aramides(comme le Kevlar®) ou de polyamides aromatiques, les fibres de polyaryléthers cétones (PAEK), telle que la polyétheréther cétone (PEEK), fibres de la polyéthercétone cétone (PEKK), fibres de la polyéthercétoneéthercétone cétone (PEKEKK) ou leurs mélanges.

Les fibres plus particulièrement préférées sont choisies parmi : fibres de verre, fibres de carbone et fibres d'aramides (comme le Kevlar®) ou leurs mélanges.

L'assemblage de fibres impliqué dans ledit procédé de l'invention comme décrit ci-haut peut être un assemblage de fibres continues, comme les tissus ou un assemblage de fibres courtes comme les feutres et les non tissés, pouvant se présenter sous forme de bandes, de nappes, de tresses, de mèches, de morceaux. Selon un mode de réalisation de l'invention, l'assemblage de fibres représente des taux de 40% à 70% en volume et de préférence de 50% à 65% en volume dudit matériau composite.

Ledit assemblage de fibres peut être aléatoire (mat), unidirectionnel (UD) ou multidirectionnel (2D, 3D ou autre). Son grammage, c'est-à-dire son poids par mètre carré, peut aller de 100 à 1000 g/m$^2$, de préférence de 200 à 700g/m$^2$.

Outre l'assemblage des fibres précitées, le matériau composite fabriqué selon l'invention peut comprendre des charges à l'état dispersé dans le polymère thermoplastique imprégnant ledit assemblage de fibres ou assemblage fibreux. Il peut s'agir de toute charge connue de l'homme du métier dans le domaine des composites. Il peut notamment s'agir de charges conductrices telles que de la poudre de métal, du noir de carbone pulvérulent, des fibrilles de carbone, des nanotubes de carbone (NTC), de carbure de silicium, de carbonitrure de bore, de nitrure de bore ou de silicium. On pourra se reporter à ce sujet à la demande WO 2010/130930 de la Demanderesse.

Ces charges dans ledit matériau fibreux peuvent représenter par exemple de 0,1 à 30% en poids, de préférence de 0,3 à 5% en poids du polymère thermoplastique.

Selon l'invention, le procédé comprend une première étape d'imprégnation i), une deuxième étape de polymérisation ii) et une troisième étape de mise en oeuvre finale iii) dudit matériau composite. Cette mise en oeuvre est réalisée en moule ouvert par pultrusion àtravers une filière chauffante.

Selon une variante du procédé de fabrication dudit matériau composite selon l'invention, la polymérisation de l'étape ii) est éventuellement complétée après l'étape de mise en oeuvre iii), par une étape finale séparée, comprenant un recuit dudit matériau composite final. Cette étape de recuit permettrait ainsi de compléter la réaction de polymérisation par polyaddition dans le cas où celle-ci n'est que partielle lors de la mise en oeuvre. Dans ce cas de polymérisation partielle ou incomplète, le matériau composite obtenu après l'étape de mise en oeuvre iii) est un solide et ne pose pas de problèmes de manipulation pour son recuit dans une étape de traitement, séparée.

En fonction des conditions de réalisation physique et chronologique de l'étape d'imprégnation i) par rapport à la mise en oeuvre iii), on peut distinguer différents cas de figure et de techniques correspondantes de mise en oeuvre applicables.

Selon une première possibilité du procédé, l'étape d'imprégnation i) est réalisée dans le moule de mise en oeuvre finale dudit composite. Plus précisément, ceci est le cas pour un procédé avec une étape de mise en oeuvre en moule fermé comme le RTM, S-RIM ou l'infusion ou l'injection-compression. Plus particulièrement, selon cette possibilité, ladite étape d'imprégnation i) peut comprendre un transfert direct de ladite composition précurseur à l'état fondu, sur ledit assemblage des fibres, et de préférence ledit assemblage des fibres est une préforme de fibres prédisposée dans ledit moule de mise en oeuvre.

Ledit transfert direct peut être réalisé à l'état fondu par extrusion dudit prépolymère, avec addition dudit allongeur dans la vis d'extrusion ou de préférence avec addition dudit allongeur en aval de l'extrudeuse au moyen d'un mélangeur. L'étape d'imprégnation i) est chronologiquement séparée de celle de la polymérisation ii) et de celle de la mise en oeuvre finale iii). Cela signifie que l'imprégnation a lieu avant la polymérisation, en particulier ici dans le moule de mise en oeuvre. Plus particulièrement, dans ledit procédé, les étapes de polymérisation ii) et de mise en oeuvre iii) peuvent être simultanées.

Ladite étape de mise en oeuvre iii) est réalisée en moule ouvert, par pultrusion à travers une filière chauffante (de mise en forme), avec éventuelle transformation supplémentaire des produits semi-finis ainsi obtenus, en particulier par superposition de rubans UD ainsi obtenus, par la technique AFP (Automatic Fiber Placement ou Placement Fibres Automatique) ou par thermocompression.

Dans le cas de la technologie Placement de Fibres Automatique (AFP) utilisant un mode de chauffage laser pour souder les rubans composites l'un sur l'autre, ladite composition précurseur peut comprendre des additifs spécifiques qui absorbent à la longueur d'onde du laser (en particulier laser UV ou IR), en particulier lorsque les rubans composites sont à base de fibres de verre ou de carbone et de préférence de fibres de verre.

Selon une autre variante du procédé de l'invention, l'étape d'imprégnation i) est réalisée à l'extérieur du moule de mise en oeuvre finale dudit composite. Selon ce procédé, ladite étape i) d'imprégnation à l'état fondu comprend une étape préalable de saupoudrage dudit assemblage de fibres par ladite composition précurseur à l'état de poudre (solide), suivie d'une étape de chauffage et de fusion de ladite poudre, et éventuellement d'une étape de calandrage, permettant ainsi l'obtention d'un matériau fibreux préimprégné comme produit intermédiaire, avant l'étape de polymérisation ii) et de mise en oeuvre finale iii).

Selon une variante équivalente de ce procédé selon l'invention, ladite étape d'imprégnation i) à l'état fondu, peut comprendre une étape de revêtement en lit fluidisé dudit assemblage de fibres, par une poudre de ladite composition précurseur, suivie du chauffage et de la fusion de ladite poudre, permettant ainsi l'obtention d'un matériau fibreux préimprégné comme produit intermédiaire, avant l'étape de polymérisation ii) et de mise en oeuvre finale iii).

Selon ces deux variantes de procédé, un matériau fibreux préimprégné est obtenu comme produit intermédiaire à l'issue de l'étape d'imprégnation i). Dans ce procédé, les étapes de polymérisation ii) et de mise en oeuvre iii) sont réalisées en utilisant ledit matériau fibreux préimprégné, comme matériau de départ (matière première) à transformer pour obtenir ledit matériau composite final.

Dans ce cas, l'étape de mise en oeuvre iii) peut être réalisée en particulier par thermocompression ou par lamination d'au moins un matériau fibreux préimprégné résultant de ladite étape d'imprégnation i), en particulier avec ledit préimprégné étant basé sur un assemblage de fibres tel que des tissus UD, des tissus 2D ou des non tissés, l'étape éventuellement complétée par une mise en forme finale par thermoformage ou estampage. L'estampage est réalisé à froid après un préchauffage du préimprégné.

Dans le cas particulier où le polymère de matrice thermoplastique est semi-cristallin, ledit procédé de fabrication dudit matériau composite selon l'invention comme exposé ci-haut peut comprendre une étape de démoulage dudit matériau composite à une température inférieure à la température de cristallisation Tc dudit polymère et plus particulièrement du polymère polyamide.

Ledit procédé de fabrication d'un matériau composite selon l'invention permet la mise en oeuvre de matériaux composites en tant que pièces mécaniques ou de structure, plus particulièrement obtenues par moulage ou par pultrusion ou par enroulement filamentaire ou par placement automatique de fibres (AFP), plus particulièrement des pièces composites (pièces mécaniques ou de structure) pour des applications dans les domaines de l'aéronautique, de l'automobile, du ferroviaire, transport routier, de l'éolien (en particulier pales d'éolienne), du photovoltaïque, du nautisme, des sports et loisirs, du bâtiment ou du génie civil, encore plus particulièrement étant des pièces composites choisies parmi : des renforts profilés, des coques comme une coque de bateau, des panneaux, y compris des panneaux sandwiches, des réservoirs composites comme un réservoir d'automobile, des canalisations composites comme des tubes de pompage et de transport de pétrole ou de gaz, des corps creux, une aile d'avion, un fuselage d'avion, une poutre ou une cloison dans une maison ou un bateau, un longeron, un spoiler, un carter d'automobile, un disque de frein, un corps de vérin ou un volant de direction, une caisse automobile, un wagon, une semelle de chaussure ou une canne de golf.

Une composition précurseur (précurseur de la matrice thermoplastique) non couverte par l'invention mais permettant la mise en oeuvre du procédé de fabrication dudit matériau composite tel que défini ci-haut selon la présente invention, comprend a) au moins un prépolymère P(X)n et b) au moins un allongeur de chaîne, pouvant être représenté par Y-A-Y, ledit prépolymère et ledit allongeur étant tels que définis ci-haut et ci-après selon la présente invention, avec le polymère thermoplastique résultant de ladite composition par réaction de polyaddition en masse et ayant une température de transition vitreuse supérieure ou égale à 80°C, de préférence de 100 à 200°C, plus préférentiellement de 110 à 200°C et encore plus préférentiellement de 110 à moins de 180°C et plus particulièrement de 120 à 170°C. Ladite composition peut être à l'état de granulés ou à l'état de poudre fine qui peut être obtenue après extrusion dudit prépolymère P(X)n selon l'invention, avec addition dudit allongeur selon l'invention dans la vis d'extrusion ou en aval de l'extrudeuse à l'aide d'un mélangeur, le mélange obtenu étant granulé et broyé finement pour obtenir ladite poudre.

En fait, cette composition précurseur est basée sur un mélange de deux composants : a) prépolymère et b) allongeur, comme définis ci-haut selon l'invention.

Cette composition précurseur peut comprendre des additifs et des charges. Concernant ces charges, il peut s'agir de toute charge connue de l'homme du métier dans le domaine des composites. Il peut notamment s'agir de charges conductrices de la chaleur et/ou conductrices de l'électricité, telles que de la poudre de métal, du noir de carbone pulvérulent, des fibrilles de carbone, des nanotubes de carbone (NTC), de carbure de silicium, de carbonitrure de bore, de nitrure de bore ou de silicium. On pourra se reporter à ce sujet à la demande WO 2010/130930 de la Demanderesse.

Ces charges peuvent représenter de 0,1 à 30% en poids, de préférence de 0,3 à 15% en poids du polymère thermoplastique (final).

Concernant les additifs, la composition précurseur selon une variante préférée de l'invention comprend plus particulièrement, des additifs spécifiques pouvant absorber à la longueur d'onde d'un laser, comme par exemple un laser UV ou IR, ceci permettant l'utilisation de la technologie de placement automatique des fibres (AFP), dans le cas où celle-ci utilise un mode de chauffage laser, pour souder les rubans composites entre eux, ceci notamment dans le cas de rubans composites à base de fibres de verre et de carbone, de préférence fibres de verre. D'autres additifs comme les stabilisants thermiques peuvent être ajoutés à la composition précurseur et donc être présents dans le matériau composite thermoplastique final tel qu'utilisé dans les pièces d'application finale, en particulier ces stabilisants étant des antioxydants, contre la thermo-oxydation et/ou la photo-oxydation du polymère de la matrice thermoplastique. Lesdits antioxydants sont de type phénolique stériquement encombré et/ou amine stériquement encombrée (connues sous le nom courant HALS). Comme exemple convenable de tels additifs, on peut citer : le noir de carbone (NC) sous forme de poudre de NC ou de préférence sous forme de mélanges maîtres à base de NC et de polyéthylène (PE) ou de NC et de polyamide (PA), $TiO_2$ (oxyde de titane), ZnO (oxyde de zinc) et dans le cas d'un laser IR, l'oxyde d'étain indium, (Indium Tin Oxide, commercialisé par Evonik) et les stabilisants thermiques tels que cités ci-haut. Comme exemple de mélange maître NC + PE avec environ 40% de NC, on peut citer l'EUTHYLEN® commercialisé par BASF. Comme exemple de mélange maître NC + PA avec environ 15% de NC, on peut citer RENOL® BLACK commercialisé par CLARIANCE.

L'invention couvre également une composition de, ou pour un matériau composite, comprenant en plus de ladite composition précurseur spécifique de l'invention, ledit assemblage de une ou plusieurs fibres synthétiques de renfort, tel que défini selon l'invention.

Est également couvert par la présente invention, un matériau fibreux préimprégné, comme produit intermédiaire ou comme produit semi-fini, lequel résulte de l'imprégnation à l'état fondu d'un assemblage d'une ou plusieurs fibres de renfort synthétiques, comme défini ci-haut, par au moins une composition précurseur telle que définie selon l'invention.

Plus particulièrement, ledit matériau fibreux préimprégné résulte d'une étape d'imprégnation i), comprenant le saupoudrage dudit assemblage de fibres par une composition précurseur à l'état de poudre ou il peut être obtenu après une étape d'imprégnation i) comprenant le revêtement dudit assemblage de fibres par ladite poudre en lit fluidisé.

Un autre objet de l'invention est l'utilisation d'une composition précurseur telle que définie ci-haut, pour l'imprégnation d'un assemblage d'une ou plusieurs fibres de renfort synthétiques, pour la fabrication d'un matériau fibreux préimprégné tel que défini ci-haut, plus particulièrement pour la fabrication d'un matériau composite.

Est également concernée l'utilisation d'une composition précurseur telle que définie selon l'invention pour la fabrication d'un matériau composite et plus particulièrement d'une pièce composite moulée et de préférence une pièce mécanique ou de structure. La pièce de structure englobe aussi bien des pièces structurales que des pièces semi-structurales.

Finalement, l'invention couvre comme produit fini, un matériau composite, lequel est obtenu selon un procédé de fabrication tel que défini selon l'invention et plus particulièrement en utilisant au moins une composition précurseur telle que définie selon l'invention pour l'étape d'imprégnation i) et pour l'étape de polymérisation ii).

Plus particulièrement, ledit matériau composite selon l'invention permet de fabriquer des pièces composites pour des applications dans les domaines de l'aéronautique, de l'automobile, du ferroviaire, transport routier, de l'éolien, du photovoltaïque, du nautisme, des sports et loisirs, du bâtiment ou du génie civil et notamment des renforts profilés, des coques comme une coque de bateau, des panneaux, y compris des panneaux sandwiches, des réservoirs composites comme un réservoir d'automobile, des canalisations composites comme des tubes de pompage et de transport de pétrole ou de gaz, des corps creux, une aile d'avion, un fuselage d'avion, une poutre ou une cloison dans une maison ou un bateau, un longeron, un spoiler, un carter d'automobile, un disque de frein, un corps de vérin ou un volant de direction, une caisse automobile, un wagon, une semelle de chaussure ou une canne de golf.

## Définitions générales valables pour l'ensemble de la description

Sauf mention contraire, les pourcentages sont donnés en valeurs massiques.

Par « fibres » dans le cadre de la présente invention, on entend des fibres de renfort synthétiques pour le matériau composite et plus particulièrement des fibres de renfort longues. Les fibres longues selon l'invention présentent un facteur de forme (L/D longueur sur diamètre) > 1000.

Tg, Tf, Tc, Tg', Tf : toutes ces températures sont mesurées par DSC : selon ISO 11357-2, pour les températures de transition vitreuse et selon ISO 11357-3 pour les températures de fusion et de cristallisation. Les mesures sont faites en 2ème chauffe, pour les PA sur des échantillons non séchés au préalable.

« Composition précurseur » signifie pour la présente invention que cette composition est le précurseur de la matrice thermoplastique ou c'est la composition dont est issue ladite matrice thermoplastique ayant la Tg indiquée.

Un polymère « à base de structure aromatique » ou « semi-aromatique » pour le polymère thermoplastique et, par conséquent pour le prépolymère correspondant P(X)n), plus particulièrement pour un polyamide ou polyester, signifie la présence de structure aromatique dans les motifs dudit polymère ou prépolymère, c'est-à-dire que ce polymère ou prépolymère comprend une structure aromatique dans ses motifs et de préférence avec au moins 25% en moles de ses motifs comprenant ladite structure aromatique.

Une signification analogue est donnée pour un polymère « à base d'une structure cycloaliphatique » ou « semi-cycloaliphatique ». Un tel polymère thermoplastique et, par conséquent, prépolymère correspondant P(X)n), plus particulièrement un polyamide ou polyester signifie la présence de structure cycloaliphatique dans les motifs dudit polymère ou prépolymère, c'est-à-dire que ce polymère ou prépolymère comprend une structure cycloaliphatique dans ses motifs et de préférence avec au moins 25% en moles de ses motifs comprenant ladite structure cycloaliphatique.

« Semi-cristallin » signifie pour le polymère thermoplastique de l'invention, un polymère qui présente un pic de fusion, mesuré en DSC, selon la norme précitée.

Quelques spécifications supplémentaires plus détaillées concernant les divers paramètres de l'invention sont données ci dessous et par paramètre considéré. Ces spécifications peuvent compléter les spécifications exposées ci-dessus par objet revendiqué, par combinaison de la spécification déjà citée du paramètre impliqué, avec ces spécifications supplémentaires et ceci s'applique à tous les objets revendiqués ou pouvant être revendiqués.

## Assemblage de fibres

Les fibres impliquées dans ledit assemblage sont des fibres longues, ce qui signifie présentant un facteur de forme > 1000 et qui peuvent être continues ou coupées. Ledit assemblage des fibres longues peut être à base de fibres continues et peut être un tissé (tissus 2D), ruban unidirectionnel (UD) ou un non tissé. Ledit assemblage peut être aussi à base de fibres longues coupées sous forme de non tissé (mat de fibres) ou feutre. Lesdites fibres sont de préférence continues.

Par « fibres synthétiques », on entend des fibres minérales ou fibres organiques de synthèse et plus particulièrement pour ces dernières, des fibres polymériques ou de polymère (non naturelles) ou un mélange de telles fibres minérales et fibres polymériques. Elles sont définies par opposition aux « fibres naturelles», qui sont par définition exclues selon l'invention du terme « synthétiques ».

## Polymère thermoplastique

L'assemblage de fibres entrant dans la fabrication du matériau composite selon l'invention est imprégné d'au moins un polymère thermoplastique ayant une température de transition vitreuse Tg supérieure ou égale à 80°C avec les préférences citées ci-haut. Ce polymère thermoplastique peut être un homopolymère ou un copolymère thermoplastique ou un mélange d'au moins deux de ces polymères thermoplastiques tels que définis ici. Il faut noter que ledit polymère thermoplastique correspond au polymère de la matrice thermoplastique finale obtenue, dudit matériau composite, dans le cas où la polymérisation est complète, à la fin de l'étape de mise en oeuvre iii). Ce polymère thermoplastique de Tg d'au moins égale à 80°C correspond donc, dans le cas de la présente invention, au produit de la réaction de polymérisation par (poly)addition en masse et à l'état fondu de ladite composition précurseur, comprenant a) au moins un prépolymère réactif P(X)n, dudit polymère thermoplastique et b) au moins un allongeur de chaîne, pouvant être représenté par Y-A-Y, comme définis ci-haut selon l'invention. Par conséquent, la chaîne du polymère thermoplastique final (après polymérisation complète de la composition précurseur) est constituée de l'enchaînement desdits prépolymères P(X)n, joints (enchaînés) entre eux par au moins un allongeur de chaîne défini selon l'invention (un ou plusieurs allongeurs jouant le rôle de « jonctions » entre les chaînes de prépolymères), par réaction entre les fonctions X et Y, comme définis ci-haut selon l'invention.

Selon un mode de réalisation de l'invention, le polymère thermoplastique est choisi parmi : un polyamide, un polyester, leurs copolymères et/ou leurs mélanges. De préférence, le polymère thermoplastique est un polyamide.

## Prépolymère P(X)n

Par « prépolymère » dudit polymère thermoplastique, on entend un oligomère du polymère thermoplastique comprenant une chaîne moléculaire P, constituée de motifs unitaires répétitifs (ou unités répétitives) identiques à ceux dudit polymère thermoplastique (mais en nombre de motifs, bien inférieur), avec cette chaîne possédant à ses extrémités n fonctions ou groupements réactifs X, avec n étant 1 ou 2 et plus préférentiellement 2. Les fonctions réactives X sont identiques l'une à l'autre et par définition elles ne peuvent pas réagir entre elles.

Grâce à la présence des fonctions réactives X aux extrémités de sa chaîne moléculaire, ledit prépolymère est capable de polymériser par réaction d'addition en masse à l'état fondu, avec un allongeur de chaîne tel que déjà défini selon l'invention et comme défini de manière complémentaire ci-dessous.

Par définition, le prépolymère P(X)n selon l'invention n'est pas réticulable. Il ne peut donner lieu, par réaction de (poly)addition avec l'allongeur tel que défini selon l'invention, qu'à un polymère linéaire, éventuellement faiblement ramifié, lequel reste par définition un polymère thermoplastique, constituant la matrice dudit matériau composite final qui en résulte. Ainsi, le matériau composite final reste facilement recyclable, par simple chauffage dudit matériau composite à recycler, de manière à obtenir la fusion dudit polymère thermoplastique en tant que matrice imprégnant lesdites fibres synthétiques, puis par la séparation à l'état fondu desdites fibres par rapport audit polymère thermoplastique en question.

### Allongeur de chaîne

Par « allongeur de chaîne », en particulier pouvant être représenté par Y-A-Y, il faut comprendre une chaîne moléculaire hydrocarbonée A possédant (ou portant ou comprenant) à chacune de ses extrémités une fonction réactive Y (deux fonctions Y par chaîne ou molécule d'allongeur), réactive avec l'une au moins desdites fonctions réactives X dudit prépolymère P(X)n. Les fonctions réactives Y sont identiques l'une à l'autre et elles ne peuvent pas réagir entre elles mais uniquement et spécifiquement avec les fonctions X dudit prépolymère. A est le résidu moléculaire porteur desdits deux fonctions ou groupements Y identiques. Ledit allongeur est non polymérique (ni polymère ni oligomère) et de masse moléculaire inférieure à 500 et de préférence inférieure à 400.

Il faut noter que la définition d'« allongeur de chaîne » au sens de l'invention diffère complètement en termes de fonction technique, de celle d'un « agent de couplage », couramment utilisé pour un matériau composite comprenant des fibres, imprégnées par une matrice polymère, mais pour désigner un composé facilitant l'adhésion entre les fibres et la matrice polymère (« couplage » concernant l'interface fibre-polymère). A la différence d'un allongeur de chaîne comme défini selon la présente invention, un « agent de couplage » n'intervient aucunement dans la polymérisation telle que définie par la présente invention pour obtenir ledit polymère thermoplastique.

Le choix dudit allongeur de chaîne dépendra de la nature de la fonction réactive X du prépolymère P(X)n comme décrit ci-haut.

### Composition précurseur

La composition précurseur selon l'invention comprend a) au moins un prépolymère et b) au moins un allongeur de chaîne, tels que définis ci-dessus selon l'invention.

La teneur en allongeur de chaîne ou en prépolymère P(X)n dans le mélange précurseur dépendra de la masse moléculaire de chacun et également du rapport molaire Y/X utilisé. Par exemple pour n = 2, ce rapport Y/X se situe entre 0,5 et 1,5 en fonction de la masse moléculaire visée pour le polymère thermoplastique final. Plus il s'approche de 1, plus les masses moléculaires moyennes en nombre Mn auront tendance à augmenter pour le polymère thermoplastique final.

Le terme précurseur signifie précurseur de la matrice thermoplastique ayant la Tg finale spécifiée. Cela signifie que cette matrice thermoplastique résulte de la réaction de polymérisation de ladite composition précurseur en masse et à l'état fondu.

Le mélange précurseur peut en outre comprendre un ou plusieurs additifs choisis par exemple parmi des charges conductrices (de la chaleur et/ou de l'électricité) comme le noir de carbone, les nanotubes de carbone, éventuellement un catalyseur comme exposé ci-haut.

### Matériau composite et étapes de fabrication

Le matériau composite est le produit final obtenu en utilisant la composition précurseur et le procédé de la présente invention.

### Etape d'imprégnation i)

L'« étape d'imprégnation » comprend une imprégnation dudit assemblage par ladite composition précurseur à l'état fluide, ce qui correspond à l'état fondu obtenu à une température permettant la fusion dudit prépolymère et allongeur, de sorte que lors de l'imprégnation à l'étape i), la viscosité du mélange (composition précurseur) ne dépasse pas 100 Pa.s, de préférence ne dépasse pas 50 Pa.s, dans les conditions d'imprégnation (en particulier température).

On peut utiliser un ou plusieurs prépolymères. Lorsque différents prépolymères P(X)n sont utilisés, leur ajout simultané ou au contraire consécutif permet d'obtenir un polymère à caractère statistique ou séquencé plus ou moins prononcé.

On peut également utiliser un ou plusieurs assemblages fibreux.

L'imprégnation de l'assemblage de fibres peut par exemple se faire par placement de l'assemblage de fibres dans un bain contenant la composition précurseur à l'état fondu, c'est-à-dire le prépolymère et l'allongeur (en mélange) à l'état fondu.

Plus particulièrement, on peut encore déposer ladite composition précurseur à l'état fondu par transfert direct à l'état fondu sur ledit assemblage fibreux, qui peut être prédisposé dans un moule de mise en oeuvre et plus particulièrement dans un moule fermé, surtout quand on utilise une technique de mise en oeuvre par RTM ou S-RIM ou par infusion ou par injection-compression.

L'imprégnation de l'assemblage de fibres peut également comprendre, comme exposé ci-haut, un saupoudrage dudit assemblage avec ladite composition précurseur à l'état de poudre, suivi de chauffage pour obtenir la fusion de ladite composition et éventuellement suivi d'un calandrage.

De même, ladite imprégnation peut comprendre le revêtement dudit assemblage fibreux en lit fluidisé, par une poudre fine de ladite composition précurseur maintenue en suspension dans l'air. Dans ce dernier cas, on passe ledit assemblage de fibres dans un lit fluidisé de particules de poudre fine de ladite composition précurseur, ladite poudre étant ensuite chauffée pour obtenir la fusion de ladite composition et éventuellement suivi d'un calandrage. Le prépolymère avec l'allongeur (composition précurseur), sous forme pulvérulente, peut être déposé sur un assemblage de fibres sous forme de tissu, comme décrit dans le document FR 2 562 467 ou EP 0 394 900. Dans ces deux derniers cas de composition précurseur à l'état de poudre, avec saupoudrage ou en lit fluidisé, on obtient après imprégnation à l'état fondu de l'étape i), un matériau fibreux préimprégné comme produit intermédiaire semi-fini, qui peut être utilisé comme tel dans la mise en oeuvre de l'étape iii) dudit matériau composite final. Ledit préimprégné est généralement sous forme de tissu (ou feuille) préimprégné et peut être ensuite utilisé comme matériau de départ pour l'étape de mise en oeuvre du matériau composite final. Par exemple, par thermocompression dudit matériau préimprégné, une pièce composite finale peut être obtenue. Egalement, plusieurs préimprégnés peuvent être superposés et transformés en plaque par thermocompression ou par lamination (avec calandrage), ladite plaque pouvant être mise en forme finale par thermoformage (à chaud) ou par estampage (à froid après un préchauffage du préimprégné).

Le saupoudrage de poudre peut être réalisé à l'aide d'un support (tamis) vibrant, afin de permettre la répartition homogène de la poudre sur ledit assemblage.

Une autre possibilité particulière d'imprégnation comprend le transfert direct à l'état fondu d'un flux de la composition précurseur sur l'assemblage de fibres, se présentant sous forme de tissu, nappe ou bande ou tresse. Par exemple, ce transfert peut être réalisé par extrusion dudit prépolymère additionné dudit allongeur dans la vis d'extrusion ou en aval de l'extrudeuse à l'aide d'un mélangeur, par exemple mélangeur statique. En particulier, ceci peut se faire dans le moule de mise en oeuvre sur un assemblage de fibres qui est une préforme desdites fibres, plus particulièrement pour une mise en oeuvre dans un moule fermé, comme par RTM ou S-RIM ou par infusion ou injection-compression.

L'étape d'imprégnation i) peut être mise en oeuvre sous pression, de préférence allant de 1 à 30 bars, de préférence de 1 à 10 bars.

L'étape d'imprégnation i) peut encore se faire par le procédé de « film stacking », à savoir par compression à chaud d'un empilement d'assemblages de fibres et de films de composition précurseur (prépolymère mélangé à l'allongeur de chaîne).

La composition précurseur selon une variante préférée comprend plus particulièrement parmi les additifs et autres charges possibles, des additifs spécifiques pouvant absorber à la longueur d'onde d'un laser, en particulier d'un laser UV ou IR, plus particulièrement en utilisant la technologie de placement automatique des fibres (AFP), dans le cas où celle-ci utilise un mode de chauffage laser pour souder les rubans composites entre eux, ceci notamment dans le cas où les rubans composites sont à base de fibres de verre ou de carbone et de préférence de fibres de verre.

Lorsque l'on souhaite incorporer des charges conductrices dans la composition précurseur à l'état fondu, il peut être avantageux de mettre en oeuvre un chauffage par micro-ondes ou par induction. On pourra là encore se reporter à la demande WO 2010/130930 de la Demanderesse.

Etape de polymérisation ii)

L'étape ii), dite « étape de polymérisation », comprend une polymérisation par réaction de polyaddition en masse et à l'état fondu dudit prépolymère avec ledit allongeur de chaîne.

L'allongeur de chaîne, qui est introduit dans le prépolymère à l'état fondu (le mélange étant la composition précurseur), reste peu actif ou inactif tant que la température de réaction de polymérisation comme indiqué déjà ci-haut, n'est pas atteinte.

La température de polymérisation est au moins supérieure à la température de fusion ou à défaut de fusion, à la température de transition vitreuse dudit prépolymère et éventuellement dudit allongeur et en particulier elle est supérieure à la Tg visée dudit polymère thermoplastique. Elle se situe en particulier de 150 à 340°C et de préférence 200 à 320°C et plus préférentiellement de 200 à 300°C.

Selon un mode de réalisation de l'invention, la polymérisation peut ne pas être complète (totale) après l'étape de mise en oeuvre iii), en particulier lors du moulage. Si nécessaire, en fonction de la conversion en polymérisation, une étape supplémentaire de recuit (traitement thermique) peut être réalisée pour compléter cette polymérisation.

Mise en oeuvre iii) dudit matériau composite final

Après l'étape ii) de polymérisation de la composition précurseur, une matrice thermoplastique solide est obtenue, ce qui permet sa mise en forme par une étape de mise en oeuvre pour la fabrication d'un matériau composite et, plus particulièrement, d'une pièce composite qui peut être en trois dimensions (3D).

La mise en oeuvre iii) peut être réalisée simultanément avec l'étape ii) de polymérisation ou encore juste après celle-ci.

Pour la réalisation d'un matériau composite et plus particulièrement d'une pièce composite, par exemple en 3D, la température de polymérisation en étape ii) et de mise en oeuvre à l'étape iii) est supérieure à la température visée de transition vitreuse Tg dudit polymère thermoplastique.

Selon un mode particulier de réalisation, la mise en oeuvre du matériau composite consiste à disposer au moins deux matériaux fibreux préimprégnés comme décrits ci-haut sur une préforme de moule, en quinconce et de façon à ce qu'ils se superposent au moins en partie jusqu'à obtention de l'épaisseur voulue. On peut chauffer au moyen d'un laser pour souder les préimprégnés entre eux, la préforme étant ensuite retirée. La composition précurseur peut comprendre alors un additif spécifique qui absorbe à la longueur d'onde dudit laser, notamment lorsqu'il s'agit d'un laser UV ou IR et ledit préimprégné est à base de fibres de verre ou de carbone , de préférence de verre.

Selon d'autres modes de réalisation, ladite mise en oeuvre du matériau composite est réalisée par l'une des techniques connues suivantes :

- le calandrage,
- le laminage,
- la pultrusion,
- la thermocompression,
- le moulage par transfert de résine (RTM),
- le moulage structuré par injection et réaction (SRIM),
- le moulage par injection-compression,
- la technique de l'enroulement filamentaire,
- ou encore une combinaison de ces techniques, suivant le cas.

On peut par exemple injecter le prépolymère, en mélange avec l'allongeur de chaîne (composition précurseur) à l'état fondu, dans une chambre de moulage comportant au moins un assemblage de fibres tel que précédemment décrit. L'intérieur de la chambre peut être à une température qui est de plus de 50°C supérieure à la température de fusion du prépolymère et/ou de l'allongeur. Après polymérisation, on peut procéder au refroidissement de la chambre de moulage et de la pièce moulée, pour enfin obtenir ladite pièce composite finale.

Une pièce en 3D, en particulier une pièce mécanique ou de structure, fabriquée selon l'invention peut également avoir une structure de type sandwich comportant une « âme » s'étendant entre deux couches externes appelées « peaux », lesdites peaux comprenant au moins un matériau composite selon l'invention. L'âme présente de préférence une plus faible densité, par rapport audit matériau composite. Il peut s'agir d'une âme en nid d'abeille ou en mousse. Les peaux et l'âme peuvent être assemblées par tout moyen/procédé connu de l'homme de l'art, par exemple par collage ou par soudage.

Une pièce composite, en particulier en 3D, fabriquée selon l'invention peut être une pièce mécanique ou de structure, notamment pour la fabrication d'une aile d'avion, d'un fuselage d'avion, d'une coque de bateau, d'un longeron, d'un spoiler d'automobile, d'un disque de frein, d'un corps de vérin ou d'un volant de direction.

Plus généralement, les matériaux composites et plus particulièrement les pièces composites (y compris en trois dimensions 3D), conformes à l'invention, peuvent être utilisées dans de nombreux domaines, tels que l'aéronautique, domaine spatial, l'automobile, l'industrie navale, l'énergie, le ferroviaire, l'éolien, le photovoltaïque, le nautisme, les sports et loisirs, le bâtiment ou le génie civil, et plus particulièrement sont des renforts profilés, des coques comme une coque de bateau, des panneaux, y compris des panneaux sandwiches, des réservoirs composites comme un réservoir d'automobile, des canalisations composites comme des tubes de pompage et de transport de pétrole ou de gaz, des corps creux, une aile d'avion, un fuselage d'avion, une poutre ou une cloison dans une maison ou un bateau, un longeron, un spoiler, un carter d'automobile, un disque de frein, un corps de vérin ou un volant de direction, une caisse automobile, un wagon, une semelle de chaussure ou une canne de golf.

Méthodes de mesure :

Viscosité à l'état fondu

La viscosité à l'état fondu, du prépolymère ou de la composition précurseur est mesurée suivant le manuel de référence du constructeur de l'appareil de mesure utilisé, qui est un rhéomètre Physica MCR301, sous balayage d'azote à la température donnée sous cisaillement de $100s^{-1}$, entre deux plans parallèles de diamètre de 50 mm.

La masse moléculaire Mn

La Mn du prépolymère ou du polymère thermoplastique est déterminée à partir de la titration (dosage) des fonctions terminales X selon une méthode potentiométrique (dosage en retour d'un réactif en excès par rapport aux fonctions terminales OH, et dosage direct pour $NH_2$ ou carboxy) et à partir de la fonctionnalité théorique n calc (vs X) calculée à partir du bilan matière et de la fonctionnalité des réactants (voir dans description le mode de calcul général).

La mesure de la viscosité intrinsèque ou inhérente est réalisée dans le m-cresol. La méthode est bien connue de l'homme du métier. On suit la norme ISO 937 mais en changeant le solvant (utilisation du m-cresol à la place de l'acide sulfurique et la température étant de 20°C).

La température de transition vitreuse Tg des polymères thermoplastiques utilisés ou des fibres polymères (Tg') utilisées est mesurée à l'aide d'un calorimètre différentiel à balayage (DSC), après un 2ème passage en chauffe, suivant la norme ISO 11357-2. La vitesse de chauffage et de refroidissement est de 20°C/min.

La température de fusion Tf (ou Tf') et la Tc sont mesurées par DSC, après une 1ère chauffe, selon ISO 11357-3. La vitesse de chauffage et de refroidissement est de 20°C/min.

A) Préparation des prépolymères P(X)n

Exemple 1 : Prépolymère polyamide (PA) diacide amorphe 10.I/6.I

Exemple 2 : Prépolymère polyamide (PA) diamine amorphe 10.I/6.I

Le mode opératoire est le même pour les deux exemples 1 et 2 avec bilan matière différent comme indiqué ci-dessous.

Dans un réacteur autoclave d'une capacité de 14 litres, on introduit successivement (et par exemple cité 1 et 2) :

|  | Ex. 1 | Ex. 2 |
|---|---|---|
| - 1,6 hexanediamine (HMDA) | 539,2 g | 523,0 g |
| - 1,10 décanediamine | 1891,3 g | 2534,1 g |
| - Acide isophtalique | 3454,7 g | 2569,0 g |
| - Rhodorsil RG22 | 3,0 g | 3,0 g |
| - $NaH_2PO_2$ 60% dans l'eau | 24,0 g | 24,0 g |
| - eau | 2000,0 g | 2000,0 g |

Le Rhodorsil RG22, un antimousse, est commercialisé par la Société Bluestar Silicones.

Après fermeture du réacteur, l'atmosphère est purgée de son oxygène par de l'azote. Le réacteur est ensuite chauffé à 250°C matière, la pression dans le réacteur atteignant 32 bars. L'eau est progressivement éliminée du réacteur par détente en 1 heure jusqu'à pression atmosphérique en maintenant une température matière à environ 240°C. Le réacteur arrivé à pression atmosphérique est ensuite mis sous balayage d'azote de 180 l/h pendant 15 minutes. Le contenu du réacteur est ensuite vidangé et refroidi dans l'eau. Après essorage, broyage grossier et séchage, on recueille 5300 g (ex. 1) et 4950 g (ex. 2) de prépolymères.

D'après le chargement en matières premières ci-dessus, on peut noter que tous les réactifs sont de fonctionnalité 2, et qu'aucun n'est de fonctionnalité 1 ou 3. Les concentrations [M] et [B] sont donc nulles et la fonctionnalité n calc du prépolymère d'après la formule décrite plus haut est de 2.

Exemple 3 : Prépolymère polyamide diacide amorphe, 11/BMACM.I/BMACM.T

Dans un réacteur autoclave d'une capacité de 14 litres, on introduit successivement :

| - acide amino 11 undécanoïque | 2325,8 g |
|---|---|
| - BMACM | 2754,5 g |
| - Acide isophtalique | 959,4 g |
| - Acide téréphtalique | 2241,1 g |
| - Rhodorsil RG22 | 3,5 g |

(suite)

| - eau | 350,0 g |
|---|---|

Après fermeture du réacteur, l'atmosphère est purgée de son oxygène par de l'azote. Le réacteur est ensuite mis en chauffe pour atteindre 240°C matière, la pression dans le réacteur atteignant 25 bars. L'eau est progressivement éliminée du réacteur par détente jusqu'à pression atmosphérique en maintenant une température matière d'environ 240°C. Le réacteur arrivé à pression atmosphérique est ensuite vidangé et refroidi dans l'eau. Après essorage, broyage grossier et séchage, on recueille 7524 g de prépolymère.

Exemple 4 : Prépolymère polyamide diacide semi-cristallin 11/6.T/10.T

Exemple 5 : Prépolymère polyamide diamine semi-cristallin 11/6.T/10.T

Le mode opératoire est identique pour les deux exemples 4 et 5 sauf le bilan matière décrit ci-dessous.
Dans un réacteur autoclave d'une capacité de 2 litres, on introduit successivement :

|  | Ex. 4 | Ex. 5 |
|---|---|---|
| - acide amino 11 undécanoïque | 41,2 g | 41,2 g |
| - 1,6 hexanediamine (HMDA) | 71,3 g | 71,3 g |
| - 1,10 décanediamine | 250,3 g | 302,3 g |
| - Acide téréphtalique | 390,0 g | 340,3 g |
| - Rhodorsil RG22 | 0,375 g | 0,375 g |
| - $NaH_2PO_2$ 60% dans l'eau | 3,0 g | 3,0 g |
| - eau | 188,7 g | 188,7 g |

Après fermeture du réacteur, l'atmosphère est purgée de son oxygène par de l'azote. Le réacteur est ensuite mis en chauffe pour atteindre 250°C matière, la pression dans le réacteur atteignant 32 bars. L'eau est progressivement éliminée du réacteur par détente en maintenant 32 bars une température matière d'environ 250°C. La pression est ensuite abaissée jusqu'à pression atmosphérique par détente en augmentant progressivement la température matière jusqu'à 300°C. Le réacteur arrivé à pression atmosphérique est ensuite mis sous balayage d'azote pendant 20 minutes. Le contenu du réacteur est ensuite vidangé et refroidi dans l'eau. Après essorage, broyage grossier et séchage, on recueille 650 g (ex. 4) et 665 g (ex. 5) de prépolymères.

Les caractéristiques essentielles des prépolymères synthétisés sont présentées au tableau 1 ci-dessous.

Tableau 1 : Caractéristiques des prépolymères P(X)n préparés

| Ex | Structure Prépoly mère | X | Tg (°C) | Tf (°C) | Tc (°C) | NH$_2$ (meq/g) | COOH (meq/g) | n calc | Mn calc | Viscosité inh (dl/g) | Viscosité état fondu 100 s$^{-1}$ (Pa.s) | T° Visco fondu (°C) |
|---|---|---|---|---|---|---|---|---|---|---|---|---|
| 1 | 10I/6I | carboxy | 88 | - | - | 0 | 1,931 | 2 | 1035 | ND | 0,35 | 250 |
| 2** | 10I/6I | amine | 60 | - | - | 1,838 | 0 | 2 | 1088 | ND | 0,15 | 250 |
| 3 | 11/BI/BT* | carboxy | 122 | - | - | 0 | 1,873 | 2 | 1067 | 0,19 | 2,6 | 250 |
| 4 | 11/6T/10T | carboxy | 101 | 267 | 235 | 0 | 0,845 | 2 | 2366 | 0,35 | 1,1 | 300 |
| 5 | 11/6T/10T | amine | 89 | 274 | 244 | 0,710 | 0 | 2 | 2817 | 0,43 | 1,7 | 300 |

*B : BMACM
** : exemple 2 hors invention

B) Préparation des pièces composites et performances (hors invention)

1) Appareillage utilisé et principe de fonctionnement :

L'équipement de RTM utilisé comprend 2 chambres séparées chauffantes permettant de fondre séparément le prépolymère et l'allongeur de chaîne. Deux pistons (un par chambre), fonctionnant sous 1 à 10 bars, permettent d'envoyer les 2 composants fondus dans un mélangeur statique puis d'injecter le mélange réactif dans un moule contenant un renfort fibreux.

Le temps de séjour est court (inférieur à 10 s) et permet d'éviter tout allongement de chaîne significatif. Ainsi, la viscosité du mélange peut être considérée identique à celle du prépolymère seul, à la température d'injection.

Le renfort fibreux utilisé est un tissu 600T FV de Chomrat (600g/m$^2$). 4 couches de ce renfort fibreux ont été déposées dans le moule avant injection pour fabriquer une plaque de composite. Le taux de fibres dans la plaque composite est de 60% en vol.

La vitesse du piston permet également d'ajuster le temps de séjour dans le mélangeur de manière à comparer l'effet de certains paramètres du procédé selon l'invention et en dehors de l'invention.

Le rapport molaire entre fonctions réactives X et Y est de : 1/1 (stoechiométrie)
Forme et taille du moule et type de moule (matière moule) : le moule est cylindrique d'un diamètre de 70 mm et d'une hauteur 4 mm.
% en volume ou en poids de fibres : % volumique de fibre est 60%.
Performances mécaniques mesurées en flexion 3 points selon méthode ISO 14125.
Température de fusion des prépolymères et allongeurs : inférieure à 280°C, souvent inférieure à 270°C (cf tableau I).

## EXEMPLES

Exemple 6 (comparatif) : Utilisation d'un polymère PA11, d'origine Arkema, sous nom commercial Tnat 2P, (Mn = 15 000g/mol)

On injecte à la température de 250°C un PA11, de viscosité 200 Pa.s., le moule étant préchauffé à 250°C avant le remplissage. Seule l'une des 2 chambres de l'équipement est utilisée (car le système est monocomposant et non réactif).

Résultats : pas d'imprégnation correcte des fibres, la résine recouvre des paquets de fibres et des zones de fibres sèches demeurent après injection.

Exemple 7 (comparatif) : Utilisation d'un prépolymère de type 11/BI/BT (résine de l'exemple 3 du tableau 1)

Dans l'une des chambres, on fond ledit prépolymère avant allongement de chaîne. Ce prépolymère est fonctionnalisé diacide. Dans l'autre chambre, on fond du PBO (bisoxazoline) Allinco 1-3 commercialisé par la société DSM, qui est un allongeur de chaîne présentant 2 fonctions oxazolines.

L'introduction du mélange prépolymère + allongeur de chaîne est volontairement retardée pendant quelques minutes de sorte que la viscosité du mélange atteigne alors 150 Pa.s, puis le mélange est introduit dans le moule, préchauffé à la température de 250°C, contenant les fibres de renfort.

Température de mesure de la viscosité de 150 Pa.s à 250°C.

Résultats : l'imprégnation est meilleure que dans le cas précédent (exemple 6), nous pouvons mesurer des propriétés mécaniques mais celles-ci restent faibles. On constate néanmoins un allongement de chaîne qui traduit l'augmentation de la Tg (voir tableau 2).

Tableau 2 : Propriétés mécaniques et mesure Tg sur composite avec prépolymère de type 11/BI/BT

| FLEXION 3 POINTS | | | DSC | |
|---|---|---|---|---|
| E (GPa), module d'Young | σ contrainte à rupture (MPa) | ε déformation à rupture (%) | Tg prépolymère | Tg plaque composite |
| 19,5 | 124 | 0,71 | 122°C | 144°C |

Exemple 8 (hors invention) : Utilisation d'un prépolymère de type 10I/6I (résine de l'exemple 1 du tableau 1)

Dans l'une des chambres, on fond ledit prépolymère avant allongement de chaîne. Ce prépolymère est fonctionnalisé diacide. Dans l'autre chambre, on fond du PBO (bisoxazoline) Allinco 1-3 commercialisé par la société DSM, qui est un allongeur de chaîne présentant 2 fonctions oxazolines.

Le mélange réactif est ensuite injecté à 250°C dans un moule préchauffé à 250°C en moins de 10 s. La viscosité en fondu du mélange est celle du prépolymère soit 0,4 Pa.s.

Résultats : l'imprégnation est réussie. Les propriétés mécaniques et la Tg sont données dans le tableau 3.

Tableau 3 : Propriétés mécaniques et mesure Tg sur composite avec prépolymère de type 10I/6I

| FLEXION 3 POINTS | | | DSC | |
|---|---|---|---|---|
| E (GPa), module d'Young | σ contrainte à rupture (MPa) | ε déformation à rupture (%) | Tg prépolymère | Tg plaque composite |
| 27,5 | 612 | 2,70 | 88°C | 118°C |

Exemple 9 (hors invention) : Utilisation d'un prépolymère de type 11/10T/6T (résine de l'exemple 4 du tableau 1)

Dans l'une des chambres, on fond ledit prépolymère avant allongement de chaîne. Ce prépolymère est fonctionnalisé diacide. Dans l'autre chambre, on fond du PBO (bisoxazoline) Allinco 1-3 commercialisé par la société DSM, qui est un allongeur de chaîne présentant 2 fonctions oxazolines.

Le mélange réactif est ensuite injecté à 280°C dans un moule préchauffé à 280°C en moins de 10 s. La viscosité en fondu du mélange est celle du prépolymère, soit 1 Pa.s.

Résultats : l'imprégnation est réussi. Les propriétés mécaniques et la Tg sont données dans le tableau 4.

Tableau 4 : Propriétés mécaniques et mesure Tg sur composite avec prépolymère de type 11/10T/6T diacide

| FLEXION 3 POINTS | | | DSC | |
|---|---|---|---|---|
| E (GPa) | σ☐ rupture (MPa) | ε rupture (%) | Tg prépolymère | Tg plaque composite |
| 25,8 | 670 | 3,39 | 101°C | 116°C |

Exemple 10 (invention) : Utilisation d'un prépolymère de type 11/10T/6T (résine exemple 5 tableau 1)

Dans l'une des chambres, on fond ledit prépolymère avant allongement de chaîne. Ce prépolymère est fonctionnalisé diamine. Dans l'autre chambre, on fond du PMDA (di-anhydride pyromellytique) commercialisé par la société SIGMA-ALDRICH qui est un allongeur de chaîne présentant 2 fonctions anhydrides.

Le mélange réactif est ensuite injecté à 280°C dans un moule préchauffé à 280°C en moins de 10 s. La viscosité en fondu du mélange est celle du prépolymère soit 2 Pa.s.

Résultats : l'imprégnation est réussi. Les propriétés mécaniques et la Tg sont données dans le tableau 5.

Tableau 5 : Propriétés mécaniques et mesure Tg sur composite avec prépolymère de type 11/10T/6T diamine

| FLEXION 3 POINTS | | | DSC | |
|---|---|---|---|---|
| E (GPa) | σ rupture (MPa) | ε rupture (%) | Tg prépolymère | Tg plaque composite |
| 25,2 | 610 | 2,8 | 89°C | 110°C |

**Revendications**

1. Procédé de fabrication d'un matériau composite, comportant un assemblage d'une ou plusieurs fibres de renfort synthétiques, imprégné d'au moins un polymère thermoplastique de température de transition vitreuse Tg supérieure ou égale à 80°C mesurée à l'aide d'un calorimètre différentiel à balayage (DSC), après un 2ème passage en chauffe, suivant la norme ISO 11357-2 avec vitesse de chauffage et de refroidissement de 20°C/min, ledit procédé comprenant :

   i) une étape d'imprégnation dudit assemblage par une composition précurseur à l'état fondu, l'imprégnation étant réalisée à une température telle que la viscosité de ladite composition précurseur à l'état fondu ne dépasse pas 100 Pa.s, mesurée au moyen d'un rhéomètre Physica MCR301 sous balayage d'azote à la température donnée sous cisaillement de 100s$^{-1}$, entre deux plans parallèles de diamètre de 50 mm, avec ladite composition précurseur comprenant :

a) au moins un prépolymère P(X)n dudit polymère thermoplastique comprenant une chaîne moléculaire P, possédant à ses extrémités n fonctions réactives X identiques, ledit prépolymère étant de structure semi-aromatique et/ou semi-cycloaliphatique, avec X étant une fonction réactive parmi : OH, $NH_2$ ou COOH, avec n étant 1 ou 2, ledit prépolymère ayant une masse moléculaire moyenne en nombre Mn allant de 500 à 10000 g.mol$^{-1}$, déterminée à partir de la titration des fonctions terminales X selon une méthode potentiométrique,

b) au moins un allongeur de chaîne, de formule Y-A-Y, comprenant deux fonctions Y identiques et réactives avec l'une au moins desdites fonctions X, avec A étant un espaceur ou radical carboné portant deux groupements Y avec A étant de structure non polymérique, le rapport molaire Y/X étant entre 0,5 et 1,5, le choix dudit allongeur par rapport à X étant comme suit :

- lorsque X est $NH_2$ ou OH:

b1) soit l'allongeur de chaîne Y-A-Y correspond à :

b1a) Y choisi parmi les groupements : maléimide, isocyanate éventuellement bloqué, oxazinone et oxazolinone,
et
b1b) A est un espaceur (ou radical carboné portant les fonctions ou groupements réactifs Y) choisi parmi :

b1ba) une liaison covalente entre deux fonctions (groupements) Y dans le cas où Y = oxazinone et oxazolinone ou
b1bb) une chaîne hydrocarbonée aliphatique ou une chaîne hydrocarbonée aromatique et/ou cycloaliphatique, ces deux dernières comprenant au moins un cycle de 5 ou 6 atomes de carbone éventuellement substitué, avec éventuellement ladite chaîne hydrocarbonée aliphatique ayant un poids moléculaire de 14 à 200 g.mol$^{-1}$

b2) soit l'allongeur de chaîne Y-A-Y correspond à Y étant un groupement caprolactame et à A étant un radical carbonyle ou à A étant un térephtaloyle ou un isophtaloyle,
b3) soit ledit allongeur de chaîne correspond à Y étant un groupement d'anhydride cyclique et cet allongeur est choisi parmi un dianhydride carboxylique cycloaliphatique et/ou aromatique, et

- lorsque X est COOH :
b4) ledit allongeur de chaîne Y-A-Y correspond à :

b4a) Y choisi parmi les groupements : oxazoline, oxazine, imidazoline ou aziridine, et à
b4b) A étant un espaceur ou radical carboné tel que défini ci-dessus.

ii) une étape de polymérisation par (poly)addition en masse à l'état fondu dudit prépolymère avec ledit allongeur de chaîne, ledit polymère thermoplastique de ladite matrice thermoplastique étant le produit de ladite polymérisation par polyaddition en masse,
iii) une étape de mise en oeuvre finale dudit composite ladite étape d'imprégnation i) étant chronologiquement séparée de celle de la polymérisation ii) et de celle de la mise en oeuvre finale iii) avec ladite étape de mise en oeuvre iii) étant réalisée en moule ouvert par pultrusion à travers une filière chauffante.

**2.** Procédé selon la revendication 1, **caractérisé en ce que** la température de transition vitreuse Tg est de 100 à 200°C.

**3.** Procédé selon la revendication 1, **caractérisé en ce que** la température de transition vitreuse Tg est de 110 à 200°C.

**4.** Procédé selon la revendication 1, **caractérisé en ce que** la température de transition vitreuse Tg est de 110 à moins de 180°C.

**5.** Procédé selon la revendication 1, **caractérisé en ce que** la température de transition vitreuse Tg est de 120 à 170°C.

**6.** Procédé selon l'une des revendications 1 à 5, **caractérisé en ce que** l'allongeur de chaîne b2) est le carbonyl biscaprolactame.

**7.** Procédé selon l'une des revendications 1 à 5, **caractérisé en ce que** l'aziridine est le 1, 1'-iso- ou téré- phtaloyl-bis (2-methyl aziridine).

**8.** Procédé selon l'une des revendications 1 à 7, **caractérisé en ce que** l'étape de polymérisation ii) est réalisée à une température allant de 150 à 340°C.

**9.** Procédé selon l'une quelconque des revendications 1 à 8, **caractérisé en ce que** ledit polymère thermoplastique est choisi parmi : un polyamide, un polyester, leurs copolymères ou leurs mélanges.

**10.** Procédé selon la revendication 9, **caractérisé en ce que** ledit polymère thermoplastique est un polyamide polyether.

**11.** Procédé selon la revendication 9, **caractérisé en ce que** ledit polymère thermoplastique est un polyamide.

**12.** Procédé selon l'une quelconque des revendications 1 à 11, **caractérisé en ce que** ledit allongeur de chaîne est une chaîne moléculaire hydrocarbonée de structure non polymérique ayant une masse moléculaire inférieure à 500.

**13.** Procédé selon l'une quelconque des revendications 1 à 12, **caractérisé en ce que** ledit prépolymère P(X)n correspond à :

  - n = 1 ou 2,
  - X étant une fonction réactive parmi : OH, $NH_2$, COOH,
  - ladite chaîne P comprenant une structure cycloaliphatique et/ou aromatique comprenant au moins un cycle de 4, 5 ou 6 atomes de carbone, éventuellement substitué.

**14.** Procédé selon l'une des revendications 1 à 13, **caractérisé en ce que** quand Y est choisi parmi oxazinone, oxazolinone, oxazine, oxazoline ou imidazoline, dans ce cas, dans l'allongeur de chaîne représenté par Y-A-Y, A représente un alkylène, tel que $-(CH_2)_m$- avec m allant de 1 à 14 ou A représente un cycloalkylène et/ou un arylène substitué alkyl ou non substitué,.

**15.** Procédé selon l'une quelconque des revendications 1 à 14, **caractérisé en ce que** ledit prépolymère est un prépolymère de polyamide obtenu à partir de :

  - la polycondensation d'au moins une diamine aliphatique linéaire ou ramifiée et d'au moins un acide dicarboxylique aromatique et/ou cycloaliphatique comportant au moins un cycle à 4, 5 ou 6 atomes de carbone éventuellement substitué, et/ou
  - la polycondensation d'au moins une diamine cycloaliphatique avec au moins un acide dicarboxylique aliphatique linéaire ou ramifié, cycloaliphatique ou aromatique, et éventuellement avec présence d'au moins un composé choisi parmi : un lactame, un acide aminocarboxylique ou la combinaison stoechiométrique d'un diacide carboxylique aliphatique et d'une diamine aliphatique.

**16.** Procédé selon l'une quelconque des revendications 1 à 15, **caractérisé en ce que** ledit polymère thermoplastique est un polyamide, homopolyamide ou copolyamide, semi-aromatique et/ou semi-cycloaliphatique.

**17.** Procédé selon la revendication 16, **caractérisé en ce que** ledit polymère thermoplastique correspond à l'une des formules suivantes :

  - polyamides parmi : 8.T, 9.T, 10.T, 11.T, 12.T,, 6.T/9.T, 9.T/10.T, 9.T/11.T, 9.T/12.T, 9/6.T, 10/6.T, 11/6.T, 12/6.T, 10/9.T, 10/10.T, 10/11.T, 10/12.T, 11/9.T, 11/10.T, 11/11.T, 11/12.T, 12/9.T, 12/10.T, 12/11.T, 12/12.T, 6.10/6.T, 6.12/6.T, 9.10/6.T, 9.12/6.T, 10.10/6.T, 10.12/6.T, 6.10/9.T, 6.12/9.T, 9.10/9.T, 9.12/9.T, 10.10/9.T 10.12/9.T, 6.10/10.T, 6.12/10.T, 9.10/10.T, 9.12/10.T, 10.10/10.T, 10.12/10.T, 6.10/12.T, 6.12/12.T, 9.10/12.T, 9.12/12.T, 10.10/12.T, 11/6.T/9.T, 11/6.T/10.T, 11/6.T/11.T, 11/6.T/12.T, 11/9.T/10.T, 11/9.T/11.T, 11/9.T/12.T, 11/10.T/11.T, 11/10.T/12.T, 11/11.T/12.T, 6.T/10.T, 6.T/11.T, 6.T/12.T, 10.T/11.T, 10.T/12.T, 11.T/12.T, 12/6.T/10.T, 12/6.T/11.T, 12/6.T/12.T, 12/9.T/10.T, 12/9.T/11.T, 12/9.T/12.T, 12/10.T/11.T, 12/10.T/12.T, 12/11.T/12.T,
  - polyamides terpolymères précédents avec 12/ remplacé par 9/, 10/, 6.10/, 6.12/, 10.10/, 10.12/, 9.10/ et 9.12/,
  - tous les polyamides cités ci-haut où le téréphtalique (T) est remplacé partiellement ou totalement par l'isophtalique (I), le naphtalène 2,6 dicarboxylique et/ou par le 1,3 ou le 1,4 CHDA (acide cyclohexane dicarboxylique), avec tout ou partie des diamines aliphatiques pouvant être remplacées par des diamines cycloaliphatiques
- tous les polyamides cités ci-haut, avec remplacement de la diamine aliphatique en $C_6$ à $C_{12}$ par une diamine cycloaliphatique parmi BMACM, BACM et/ou IPDA et avec remplacement de tout ou partie du diacide aromatique T, par un diacide aliphatique linéaire ou ramifié en $C_6$ à $C_{18}$.

18. Procédé selon l'une quelconque des revendications 1 à 17, **caractérisé en ce que** ledit polymère thermoplastique est un polyamide semi-cristallin ayant une température de fusion Tf et une température de cristallisation Tc, Tf et Tc étant mesurées par DSC, après une 1ère chauffe, selon ISO 11357-3 avec une vitesse de chauffage et de refroidissement de 20°C/min.

19. Procédé selon l'une quelconque des revendications 1 à 17, **caractérisé en ce que** ledit polymère thermoplastique est un polyamide amorphe.

20. Procédé selon l'une quelconque des revendications 1 à 19, **caractérisé en ce que** lesdites fibres synthétiques sont choisies parmi :

- les fibres minérales
- les fibres polymériques ou de polymère, celles-ci ayant une température de fusion Tf' ou de transition vitreuse Tg' à défaut de Tf', supérieure à la température de polymérisation de ladite composition précurseur, Tg' étant mesurée à l'aide d'un calorimètre différentiel à balayage (DSC), après un 2ème passage en chauffe, suivant la norme ISO 11357-2 avec vitesse de chauffage et de refroidissement de 20°C/min et Tf' étant mesurée par DSC, après une 1ère chauffe, selon ISO 11357-3 avec une vitesse de chauffage et de refroidissement de 20°C/min.
- ou les mélanges des fibres précitées.

21. Procédé selon l'une quelconque des revendications 1 à 20, **caractérisé en ce que** ladite polymérisation de l'étape ii) est éventuellement complétée après l'étape de mise en oeuvre iii), par une étape finale séparée comprenant un recuit dudit matériau composite final.

22. Procédé selon l'une des revendications 1 à 21, **caractérisé en ce que** l'étape de polymérisation et de mise en oeuvre sont simultanées.

23. Procédé selon l'une des revendications 1 à 22, **caractérisé en ce qu'**il comprend la transformation supplémentaire des produits semi-finis obtenus par superposition de rubans unidirectionnels (UD) obtenus, par la technique AFP (placement des fibres automatique) ou par thermocompression, avec ladite composition précurseur de départ comprenant des additifs spécifiques qui absorbent à la longueur d'onde d'un laser, lorsque les rubans UD sont à base de fibres de verre ou de carbone.

24. Procédé selon l'une des revendications 1 à 23, **caractérisé en ce que** ledit matériau composite est sous forme de pièce ou d'article composite, pour des applications dans le domaine de l'aéronautique, de l'automobile, du ferroviaire, transport routier, de l'éolien, du photovoltaïque, du nautisme, des sports et loisirs, du bâtiment ou du génie civil, pour fabriquer : des renforts profilés, des coques, des panneaux, des réservoirs composites, des canalisations composites, des corps creux, une aile d'avion, un fuselage d'avion, une poutre ou une cloison dans une maison ou un bateau, un longeron, un spoiler, un carter d'automobile, un disque de frein, un corps de vérin ou un volant de direction, une caisse automobile, un wagon, une semelle de chaussure ou une canne de golf.

25. Matériau composite, **caractérisé en ce qu'**il est obtenu selon un procédé de fabrication tel que défini selon l'une des revendications 1 à 23.

26. Matériau composite selon la revendication 25, **caractérisé en ce qu'**il s'agit d'une pièce mécanique ou de structure dans le domaine de l'aéronautique, de l'automobile, du ferroviaire, transport routier, de l'éolien, du photovoltaïque, du nautisme, des sports et loisirs, du bâtiment ou du génie civil, choisie parmi : des renforts profilés, des coques, des panneaux, des réservoirs composites, des canalisations composites, des corps creux, une aile d'avion, un fuselage d'avion, une poutre ou une cloison dans une maison ou un bateau, un longeron, un spoiler, un carter d'automobile, un disque de frein, un corps de vérin ou un volant de direction, une caisse automobile, un wagon, une semelle de chaussure ou une canne de golf.

**Patentansprüche**

1. Verfahren zur Herstellung eines Verbundmaterials, umfassend eine Assemblierung einer oder mehrerer Synthetikverstärkungsfasern, die mit mindestens einem thermoplastischen Polymer mit einer Glasübergangstemperatur Tg von größer oder gleich 80°C imprägniert sind, mit Hilfe einer dynamischen Differenzkalorimentrie (DSC) gemessen, nach einem 2. Heizlauf gemäß der Norm ISO 11357-2 mit einer Heiz- und Kühlrate von 20°C/min, wobei das Verfahren umfasst:

   i) einen Schritt der Imprägnierung der Assemblierung mit einer Vorläuferzusammensetzung im geschmolzenen Zustand, wobei die Imprägnierung bei einer derartigen Temperatur durchgeführt wird, dass die Viskosität der Vorläuferzusammensetzung im geschmolzenen Zustand 100 Pa.s nicht überschreitet, gemessen mittels eines Rheometers Physica MCR301 unter Spülen mit Stickstoff bei einer gegebenen Temperatur unter einer Scher-belastung von 100 s$^{-1}$, zwischen zwei parallelen Ebenen mit einem Durchmesser von 50 mm, wobei die Vorläuferzusammensetzung umfasst:

   a) mindestens ein Präpolymer P(X)n des thermoplastischen Polymers, umfassend eine Molekülkette P, die an ihren Enden n identische reaktive Funktionen X besitzt, wobei das Präpolymer eine semi-aromatische und/oder semicycloaliphatische Struktur aufweist, wobei X eine reaktive Funktion ist unter: OH, NH$_2$ oder COOH, wobei n 1 oder 2 ist, wobei das Präpolymer eine zahlenmittlere Molekularmasse Mn von 500 bis 10 000 g.mol$^{-1}$ aufweist, bestimmt durch Titration der terminalen Funktionen X gemäß einer potentiometrischen Methode,
   b) mindestens einen Kettenverlängerer der Formel Y-A-Y, umfassend zwei Funktionen Y, die identisch und mit mindestens einer der Funktionen X reaktiv sind, wobei A ein Spacer oder Kohlenstoffrest mit zwei Gruppen Y ist, wobei A eine Nicht-Polymerstruktur ist,
   wobei das Molverhältnis Y/X zwischen 0,5 und 1,5 beträgt,
   wobei die Auswahl des Verlängerers im Verhältnis zu X wie folgt ist:

   - wenn X NH$_2$ oder OH ist:

   b1) entweder der Kettenverlängerer Y-A-Y entspricht:

   b1a) Y, ausgewählt aus den Gruppen: Maleimid, Isocyanat, gegebenenfalls blockiert, Oxazinon und Oxazolinon, und
   b1b) A ein Spacer (oder ein kohlenstoffhaltiger Rest, der die reaktiven Funktionen oder Gruppen Y trägt) ist, ausgewählt aus:

   b1ba) einer kovalenten Bindung zwischen zwei Funktionen (Gruppen) Y in dem Fall, wo Y = Oxazinon und Oxazolinon, oder
   b1bb) einer aliphatischen Kohlenwasserstoffkette oder einer aromatischen und/oder cycloaliphatischen Kohlenwasserstoffkette, wobei diese beiden Letzteren mindestens einen Zyklus mit 5 oder 6 Kohlenstoffatomen, gegebenenfalls substituiert, umfassen, wobei die aliphatische Kohlenwasserstoffkette gegebenenfalls ein Molekulargewicht von 14 bis 200 g.mol$^{-1}$ aufweist,

   b2) oder der Kettenverlängerer Y-A-Y entspricht Y, das eine Caprolactam-Gruppe ist, und A, das ein Carbonylrest ist, oder A, das ein Terephthaloyl oder ein Isophthaloyl ist,
   b3) oder der Kettenverlängerer Y-A-Y entspricht Y, das eine cyclische Anhydrid-Gruppe ist, und dieser Verlängerer aus einem cycloaliphatischen und/oder aromatischen Carbonsäureanhydrid ausgewählt ist, und

   - wenn X COOH ist:

   b4) der Kettenverlängerer Y-A-Y entspricht:

   b4a) Y, ausgewählt aus den Gruppen: Oxazolin, Oxazin, Imidazolin oder Aziridin, und
   b4b) A, das ein kohlenstoffhaltiger Spacer oder Rest ist, wie oben definiert,

   ii) einen Schritt der Polymerisation durch (Poly)Addition in Masse im geschmolzenen Zustand des Präpolymers mit dem Kettenverlängerer, wobei das thermoplastische Polymer der thermoplastischen Matrix das Ergebnis der Polymerisation durch Polyaddition in Masse ist,

iii) einen Schritt der Umsetzung des Verbunds, wobei der Imprägnierschritt i) chronologisch von jenem der Polymerisation ii) und jenem der Umsetzung iii) getrennt ist,

wobei der Durchführungsschritt iii) in einer offenen Form durch Pultrusion quer über einen Heizdraht vorgenommen wird.

2. Verfahren nach Anspruch 1,
**dadurch gekennzeichnet, dass** die Glasübergangstemperatur Tg 100 bis 200°C beträgt.

3. Verfahren nach Anspruch 1,
**dadurch gekennzeichnet, dass** die Glasübergangstemperatur Tg 110 bis 200°C beträgt.

4. Verfahren nach Anspruch 1,
**dadurch gekennzeichnet, dass** die Glasübergangstemperatur Tg 110 bis weniger als 180°C beträgt.

5. Verfahren nach Anspruch 1,
**dadurch gekennzeichnet, dass** die Glasübergangstemperatur Tg 120 bis 170°C beträgt.

6. Verfahren nach einem der Ansprüche 1 bis 5,
**dadurch gekennzeichnet, dass** der Kettenverlängerer b2) Carbonylbiscaprolactam ist.

7. Verfahren nach einem der Ansprüche 1 bis 5,
**dadurch gekennzeichnet, dass** das Aziridin 1,1'-Iso- oder Terephthaloyl-bis-(2-methylaziridin) ist.

8. Verfahren nach einem der Ansprüche 1 bis 7,
**dadurch gekennzeichnet, dass** der Polymerisationsschritt ii) bei einer Temperatur von 150 bis 340°C durchgeführt wird.

9. Verfahren nach einem der Ansprüche 1 bis 8,
**dadurch gekennzeichnet, dass** das thermoplastische Polymer ausgewählt wird aus: einem Polyamid, einem Polyester, ihren Copolymeren oder ihren Mischungen.

10. Verfahren nach Anspruch 9,
**dadurch gekennzeichnet, dass** das thermoplastische Polymer ein Polyamidpolyether ist.

11. Verfahren nach Anspruch 9,
**dadurch gekennzeichnet, dass** das thermoplastische Polymer ein Polyamid ist.

12. Verfahren nach einem der Ansprüche 1 bis 11,
**dadurch gekennzeichnet, dass** der Kettenverlängerer eine Kohlenwasserstoffmolekülkette mit einer Nicht-Polymerstruktur mit einer Molekularmasse von weniger als 500 ist.

13. Verfahren nach einem der Ansprüche 1 bis 12,
**dadurch gekennzeichnet, dass** das Präpolymer P(X)n entspricht:

- n = 1 oder 2,
- wobei X eine reaktive Funktion ist unter: OH, $NH_2$, COOH;
- wobei die Kette P eine cycloaliphatische und/oder aromatische Struktur umfasst, die mindestens einen Zyklus mit 4, 5 oder 6 Kohlenstoffatomen, gegebenenfalls substituiert, umfasst.

14. Verfahren nach einem der Ansprüche 1 bis 13,
**dadurch gekennzeichnet, dass**, wenn Y aus Oxazinon, Oxazolinon, Oxazin, Oxazolin oder Imidazolin ausgewählt wird, in diesem Fall in dem Kettenverlängerer, der durch Y-A-Y dargestellt wird, A ein Alkylen darstellt, wie $-(CH_2)_m-$, wobei m 1 bis 14 ist, oder A ein Cycloalkylen und/oder ein Arylen-substituiertes oder unsubstituiertes Alkyl darstellt.

15. Verfahren nach einem der Ansprüche 1 bis 14,

**dadurch gekennzeichnet, dass** das Präpolymer ein Präpolymer von Polyamid ist, das erhalten wird aus:

- der Polykondensation mindestens eines linearen oder verzweigten aliphatischen Diamins und mindestens einer aromatischen und/oder cycloaliphatischen Dicarbonsäure, umfassend mindestens einen Zyklus mit 4, 5 oder 6 Kohlenstoffatomen, gegebenenfalls substituiert, und/oder
- der Polykondensation mindestens eines cycloaliphatischen Diamins mit mindestens einer linearen oder verzweigten aliphatischen, cycloaliphatischen oder aromatischen Dicarbonsäure, und gegebenenfalls in Anwesenheit mindestens einer Verbindung, ausgewählt aus: einem Lactam, einer Aminocarbonsäure oder der stöchiometrischen Kombination einer aliphatischen Dicarbonsäure und eines aliphatischen Diamins.

**16.** Verfahren nach einem der Ansprüche 1 bis 15,
**dadurch gekennzeichnet, dass** das thermoplastische Polymer ein Polyamid, Homopolyamid oder Copolyamid, semi-aromatisch und/oder semi-cycloaliphatisch, ist.

**17.** Verfahren nach Anspruch 16,
**dadurch gekennzeichnet, dass** das thermoplastische Polymer einer der folgenden Formeln entspricht:

- Polyamiden unter: 8.T, 9.T, 10.T, 11.T, 12.T, 6.T/9.T, 9.T/10.T, 9.T/11.T, 9.T/12.T, 9/6.T, 10/6.T, 11/6.T, 12/6.T, 10/9.T, 10/10.T, 10/11.T, 10/12.T, 11/9.T, 11/10.T, 11/11.T, 11/12.T, 12/9.T, 12/10.T, 12/11.T, 12/12.T, 6.10/6.T, 6.12/6.T, 9.10/6.T, 9.12/6.T, 10.10/6.T, 10.12/6.T, 6.10/9.T, 6.12/9.T, 9.10/9T, 9.12/9.T, 10.10/9.T, 10.12/9.T, 6.10/10.T, 6.12/10.T, 9.10/10.T, 9.12/10.T, 10.10/10.T, 10.12/10.T, 6.10/12.T, 6.12/12.T, 9.10/12.T, 9.12/12.T, 10.10/12.T, 11/6.T/9.T, 11/6.T/10.T, 11/6.T/11.T, 11/6.T/12.T, 11/9.T/10.T, 11/9.T/11.T, 11/9.T/12.T, 11/10T./11.T, 11/10.T/12.T, 11/11.T/12.T, 6.T/10.T, 6.T/11.T, 6.T/12.T, 10.T/11.T, 10.T/12.T, 11.T/12.T, 12/6.T/10.T, 12/6.T/11.T, 12/6.T/12.T, 12/9.T/10.T, 12/9.T/11.T, 12/9.T/12.T, 12/10.T/11.T, 12/10.T/12.T, 12/11.T/12.T,
- vorstehenden Terpolymerpolyamiden, wobei 12/ ersetzt wird durch 9/, 10/, 6.10/, 6.12/, 10.10/, 10.12/, 9.10/ und 9.12/,
- allen oben angeführten Polyamiden, wobei Terephthalsäure (T) teilweise oder vollständig ersetzt wird durch Isophthalsäure (I), Naphthalin-2,6-dicarbonsäure und/oder durch 1,3- oder 1,4-CHDA (Cyclohexandicarbonsäure), wobei alle oder ein Teil der aliphatischen Diamine durch cycloaliphatische Diamine ersetzt werden können,
- allen oben angeführten Polyamiden, wobei das aliphatische $C_6$-$C_{12}$-Diamin ersetzt werden kann durch ein cycloaliphatisches Diamin unter BMACM, BACM und/oder IPDA, und wobei die gesamte oder ein Teil der aromatischen Disäure T ersetzt werden kann durch eine aliphatische lineare oder verzweigte $C_6$-$C_{18}$-Disäure.

**18.** Verfahren nach einem der Ansprüche 1 bis 17,
**dadurch gekennzeichnet, dass** das thermoplastische Polymer ein semi-kristallines Polyamid mit einer Schmelztemperatur Tf und einer Kristallisationstemperatur Tc ist, wobei Tf und Tc durch DSC gemessen werden, nach einem 1. Heizen, gemäß ISO 11357-3 mit einer Heiz- und Kühlrate von 20°C/min.

**19.** Verfahren nach einem der Ansprüche 1 bis 17,
**dadurch gekennzeichnet, dass** das thermoplastische Polymer ein amorphes Polyamid ist.

**20.** Verfahren nach einem der Ansprüche 1 bis 19,
**dadurch gekennzeichnet, dass** die Synthetikfasern ausgewählt werden aus:

- Mineralfasern,
- polymerischen oder Polymerfasern, wobei diese eine Schmelztemperatur Tf' oder Glasübergangstemperatur Tg' in Ermangelung einer Tf' aufweisen, die höher ist als die Polymerisationstemperatur der Vorläuferzusammensetzung, wobei Tg' mit Hilfe einer dynamischen Differenzkalorimetrie (DSC) gemessen wird, nach einem 2. Heizlauf gemäß der Norm ISO 11357-2 mit einer Heiz- und Kühlrate von 20°C/min, und Tf' durch DSC gemessen wird, nach einem 1. Heizen gemäß der Norm ISO 11357-3 mit einer Heiz- und Kühlrate von 20°C/min,
- oder Mischungen der vorgenannten Fasern.

**21.** Verfahren nach einem der Ansprüche 1 bis 20,
**dadurch gekennzeichnet, dass** die Polymerisation des Schritts ii) gegebenenfalls nach dem Durchführungsschritt iii) durch einen getrennten Endschritt vervollständigt wird, der ein Glühen des Endverbundmaterials umfasst.

**22.** Verfahren nach einem der Ansprüche 1 bis 21,
**dadurch gekennzeichnet, dass** der Schritt der Polymerisation und der Durchführung gleichzeitig sind.

**23.** Verfahren nach einem der Ansprüche 1 bis 22,
**dadurch gekennzeichnet, dass** es eine ergänzende Umwandlung der durch Überlagerung unidirektionaler (UD) Bänder erhaltenen halbfertigen Produkte durch die AFP-Technik (automatische Faserplatzierung) oder durch Thermokompression umfasst, wobei die Ausgangsvorläuferzusammensetzung spezifische Additive umfasst, die bei der Wellenlänge eines Lasers absorbieren, wenn die UD-Bänder auf Glas- oder Kohlefasern basieren.

**24.** Verfahren nach einem der Ansprüche 1 bis 23, **dadurch gekennzeichnet, dass** das Verbundmaterial in der Form eines Verbundstücks oder -artikels für Anwendungen auf dem Gebiet der Luftfahrt, des Automobils, der Eisenbahn, des Straßentransports, der Windkraft, der Photovoltaik, der Nautik, des Freizeitsports, des Bauwesens oder des Baugewerbes ist, um herzustellen: Profilverstärkungen, Schalen, Platten, Verbundreservoirs, Verbundkanalisationen, Hohlkörper, einen Flugzeugflügel, einen Flugzeugrumpf, einen Balken oder eine Trennwand in einem Haus oder einem Schiff, einen Längsträger, einen Spoiler, ein Automobilgehäuse, eine Bremsscheibe, einen Zylinderkörper oder ein Lenkrad, eine Automobilkarosserie, einen Waggon, eine Schuhsohle oder einen Golfschläger.

**25.** Verbundmaterial,
**dadurch gekennzeichnet, dass** es gemäß einem Herstellungsverfahren, wie nach einem der Ansprüche 1 bis 23 definiert, erhalten wird.

**26.** Verbundmaterial nach Anspruch 25,
**dadurch gekennzeichnet, dass** es sich um ein mechanisches oder Strukturstück auf dem Gebiet der Luftfahrt, des Automobils, der Eisenbahn, des Straßentransports, der Windkraft, der Photovoltaik, der Nautik, des Freizeitsports, des Bauwesens oder des Baugewerbes handelt, ausgewählt aus:
Profilverstärkungen, Schalen, Platten, Verbundreservoirs, Verbundkanalisationen, Hohlkörpern, einem Flugzeugflügel, einem Flugzeugrumpf, einem Balken oder einer Trennwand in einem Haus oder einem Schiff, einem Längsträger, einem Spoiler, einem Automobilgehäuse, einer Bremsscheibe, einem Zylinderkörper oder einem Lenkrad, einer Automobilkarosserie, einem Waggon, einer Schuhsohle oder einem Golfschläger.

**Claims**

**1.** Process for the manufacture of a composite material, comprising an assemblage of one or more synthetic reinforcing fibers, which is impregnated with at least one thermoplastic polymer having a glass transition temperature Tg of greater than or equal to 80°C, measured using a differential scanning calorimeter (DSC), after a 2$^{nd}$ heat pass according to Standard ISO 11357-2 with a heating and cooling rate of 20°C/min, said process comprising:

i) a stage of impregnation of said assemblage with a precursor composition in the molten state, the impregnation being carried out at a temperature such that the viscosity of said precursor composition in the molten state does not exceed 100 Pa.s, measured using a Physica MCR301 rheometer while flushing with nitrogen at the given temperature under shearing at 100 s$^{-1}$, between two parallel plates having a diameter of 50 mm, with said precursor composition comprising:

a) at least one prepolymer $P(X)_n$ of said thermoplastic polymer, comprising a molecular chain P having, at its ends, n identical reactive functional groups X, said prepolymer being of semiaromatic and/or semicycloaliphatic structure, with X being a reactive functional group from: OH, $NH_2$ or COOH, with n being 1 or 2, said prepolymer having a number-average molecular weight Mn ranging from 500 to 10 000 g.mol$^{-1}$, determined from the titration of the end X functional groups according to a potentiomentric method,
b) at least one chain extender, of formula Y-A-Y, comprising two identical Y functional groups which react with at least one of said X functional groups, with A being a carbon-based spacer or radical carrying two Y groups with A being of nonpolymeric structure, the molar ratio Y/X being between 0.5 and 1.5,
the choice of said extender with respect to X being as follows:

- when X is $NH_2$ or OH:

b1) either the chain extender Y-A-Y corresponds to:

b1a) Y chosen from the groups: maleimide, optionally blocked isocyanate, oxazinone and oxazolinone,
and
b1b) A is a spacer (or carbon-based radical bearing reactive groups or functional groups Y) chosen from:

b1ba) a covalent bond between two Y functional groups (groups) in the case where Y = oxazinone or oxazolinone, or
b1bb) an aliphatic hydrocarbon chain or an aromatic and/or cycloaliphatic hydrocarbon chain, the latter two comprising at least one ring of 5 or 6 carbon atoms which is optionally substituted, with optionally said aliphatic hydrocarbon chain having a molecular weight of 14 to 200 g.mol$^{-1}$,

b2) or the chain extender Y-A-Y corresponds to Y being a caprolactam group and to A being a carbonyl radical or to A being a terephthaloyl or an isophthaloyl,
b3) or said chain extender corresponds to Y being a cyclic anhydride group and this extender is chosen from a cycloaliphatic and/or aromatic dicarboxylic anhydride
and

- when X is COOH:

b4) said chain extender Y-A-Y corresponds to:

b4a) Y chosen from the groups: oxazoline, oxazine, imidazoline or aziridine,
and to
b4b) A being a carbon-based spacer or radical as defined above,

ii) a stage of bulk polymerization by (poly)addition in the molten state of said prepolymer with said chain extender, said thermoplastic polymer of said thermoplastic matrix being the product of said bulk polymerization by polyaddition,
iii) a stage of final processing of said composite, said impregnation stage i) being separated in time from the polymerization stage ii) and from the final processing stage iii) with

said processing stage iii) being carried out in an open mold by pultrusion through a heating die.

2. Process according to Claim 1, **characterized in that** the glass transition temperature Tg is from 100 to 200°C.

3. Process according to Claim 1, **characterized in that** the glass transition temperature Tg is from 110 to 200°C.

4. Process according to Claim 1, **characterized in that** the glass transition temperature Tg is from 110 to less than 180°C.

5. Process according to Claim 1, **characterized in that** the glass transition temperature Tg is from 120 to 170°C.

6. Process according to one of Claims 1 to 5, **characterized in that** the chain extender b2) is carbonylbiscaprolactam.

7. Process according to one of Claims 1 to 5, **characterized in that** the aziridine is 1,1'-iso- or terephthaloyl bis(2-methylaziridine).

8. Process according to any one of Claim 1 to 7, **characterized in that** the polymerization stage ii) is carried out at a temperature ranging from 150 to 340°C.

9. Process according to any one of Claims 1 to 8, **characterized in that** said thermoplastic polymer is chosen from: a polyamide, a polyester, their copolymers or their mixtures.

10. Process according to Claim 9, **characterized in that** said thermoplastic polymer is a polyamide polyether.

11. Process according to Claim 9, **characterized in that** said thermoplastic polymer is a polyamide.

**12.** Process according to any one of Claims 1 to 11, **characterized in that** said chain extender is a hydrocarbon molecular chain of nonpolymeric structure, with a molecular weight of less than 500.

**13.** Process according to any one of Claims 1 to 12, **characterized in that** said prepolymer $P(X)_n$ corresponds to:

- n = 1 or 2,
- X being a reactive functional group from: OH, $NH_2$, COOH,
- said chain P comprising a cycloaliphatic and/or aromatic structure comprising at least one ring of 4, 5 or 6 carbon atoms which is optionally substituted.

**14.** Process according to one of Claims 1 to 13, **characterized in that**, when Y is chosen from oxazinone, oxazolinone, oxazine, oxazoline or imidazoline, in this case, in the chain extender represented by Y-A-Y, A represents an alkylene, such as $-(CH_2)_m-$ with m ranging from 1 to 14 or A represents a cycloalkylene and/or an arylene which is alkyl-substituted or unsubstituted.

**15.** Process according to any one of Claims 1 to 14, **characterized in that** said prepolymer is a polyamide prepolymer obtained from:

- the polycondensation of at least one linear or branched aliphatic diamine and of at least one aromatic and/or cycloaliphatic dicarboxylic acid comprising at least one ring having 4, 5 or 6 carbon atoms which is optionally substituted, and/or
- the polycondensation of at least one cycloaliphatic diamine with at least one linear or branched aliphatic, cycloaliphatic or aromatic dicarboxylic acid, and optionally with the presence of at least one compound chosen from: a lactam, an aminocarboxylic acid or the stoichiometric combination of an aliphatic dicarboxylic acid and an aliphatic diamine.

**16.** Process according to any one of Claims 1 to 15, **characterized in that** said thermoplastic polymer is a semiaromatic and/or semicycloaliphatic polyamide, homopolyamide or copolyamide.

**17.** Process according to Claim 16, **characterized in that** said thermoplastic polymer corresponds to one of the following formulae:

- polyamides from: 8.T, 9.T, 10.T, 11.T, 12.T, 6.T/9.T, 9.T/10.T, 9.T/11.T, 9.T/12.T, 9/6.T, 10/6.T, 11/6.T, 12/6.T, 10/9.T, 10/10.T, 10/11.T, 10/12.T, 11/9.T, 11/10.T, 11/11.T, 11/12.T, 12/9.T, 12/10.T, 12/11.T, 12/12.T, 6.10/6.T, 6.12/6.T, 9.10/6.T, 9.12/6.T, 10.10/6.T, 10.12/6.T, 6.10/9.T, 6.12/9.T, 9.10/9.T, 9.12/9.T, 10.10/9.T 10.12/9.T, 6.10/10.T, 6.12/10.T, 9.10/10.T, 9.12/10.T, 10.10/10.T, 10.12/10.T, 6.10/12.T, 6.12/12.T, 9.10/12.T, 9.12/12.T, 10.10/12.T, 11/6.T/9.T, 11/6.T/10.T, 11/6.T/11.T, 11/6.T/12.T, 11/9.T/10.T, 11/9.T/11.T, 11/9.T/12.T, 11/10.T/11.T, 11/10.T/12.T, 11/11.T/12.T, 6.T/10.T, 6.T/11.T, 6.T/12.T, 10.T/11.T, 10.T/12.T, 11.T/12.T, 12/6.T/10.T, 12/6.T/11.T, 12/6.T/12.T, 12/9.T/10.T, 12/9.T/11.T, 12/9.T/12.T, 12/10.T/11.T, 12/10.T/12.T, 12/11.T/12.T,
- preceding terpolymer polyamides with 12/ replaced with 9/, 10/, 6.10/, 6.12/, 10.10/, 10.12/, 9.10/ and 9.12/,
- all the abovementioned polyamides where terephthalic (T) is partially or completely replaced with isophthalic (I), with naphthalene-2,6-dicarboxylic and/or with 1,3- or 1,4-CHDA (cyclohexanedicarboxylic acid), with it being possible for all or a portion of the aliphatic diamines to be replaced with cycloaliphatic diamines,
- all the abovementioned polyamides, with replacement of the $C_6$ to $C_{12}$ aliphatic diamine with a cycloaliphatic diamine from BMACM, BACM and/or IPDA and with replacement of all or part of the aromatic diacid T with a linear or branched $C_6$ to $C_{18}$ aliphatic diacid.

**18.** Process according to any one of Claims 1 to 17, **characterized in that** said thermoplastic polymer is a semicrystalline polyamide having a melting point M.p. and a crystallization temperature C.t, M.p. and C.t. being measured by DSC, after a 1st heat, according to ISO 11357-3 with a heating and cooling rate of 20°C/min.

**19.** Process according to any one of Claims 1 to 17, **characterized in that** said thermoplastic polymer is an amorphous polyamide.

**20.** Process according to any one of Claims 1 to 19, **characterized in that** said synthetic fibers are chosen from:

- mineral fibers,

- polymer fibers, these having a melting point M.p.' or a glass transition temperature Tg', for lack of M.p.', which is greater than the polymerization temperature of said precursor composition, Tg' being measured using a differential scanning calorimeter (DSC), after a 2nd heat pass, according to standard ISO 11357-2 with a heating and cooling rate of 20°C/min and M.p.' being measured by DSC, after a 1st heat, according to ISO 11357-3 with a heating and cooling rate of 20°C/min,
- or the mixtures of the abovementioned fibers.

21. Process according to any one of Claims 1 to 20, **characterized in that** said polymerization of stage ii) is optionally completed, after the processing stage iii), by a separate final stage comprising an annealing of said final composite material.

22. Process according to one of Claims 1 to 21, **characterized in that** the polymerization stage and the processing stage are simultaneous.

23. Process according to one of Claims 1 to 22, **characterized in that** it comprises the additional conversion of the semi-finished products obtained by superposition of unidirectional (UD) bands obtained, using the AFP (Automatic Fiber Placement) technique or using thermocompression, with said starting precursor composition comprising specific additives which absorb at the wavelength of a laser when the UD bands are based on glass fibers or carbon fibers.

24. Process according to one of Claims 1 to 23, **characterized in that** said composite material is in the form of a composite part or article for applications in the following fields: aeronautics, the motor vehicle industry, the railroad industry, road transportation, wind power, photovoltaics, sports and leisure, including water sports, the construction industry or civil engineering, in order to manufacture: profiled reinforcements, hulls, panels, composite tanks, composite pipelines, hollow bodies, an aircraft wing, an aircraft fuselage, a beam or a partition in a house or a boat, a side rail, a spoiler, a motor vehicle housing, a brake disk, an actuating cylinder or a steering wheel, a motor vehicle body, a railroad car, a footwear sole or a golf club.

25. Composite material, **characterized in that** it is obtained according to a manufacturing process as defined according to one of Claims 1 to 23.

26. Composite material according to Claim 25, **characterized in that** it is a mechanical or structural part in the field of aeronautics, the motor vehicle industry, the railroad industry, road transportation, wind power, photovoltaics, sports and leisure, including water sports, the construction industry or civil engineering, chosen from: profiled reinforcements, hulls, panels, composite tanks, composite pipelines, hollow bodies, an aircraft wing, an aircraft fuselage, a beam or a partition in a house or a boat, a side rail, a spoiler, a motor vehicle housing, a brake disk, an actuating cylinder or a steering wheel, a motor vehicle body, a railroad car, a footwear sole or a golf club.

## RÉFÉRENCES CITÉES DANS LA DESCRIPTION

**Documents brevets cités dans la description**

- EP 0201367 A
- FR 2936441
- FR 2603891
- WO 2005061209 A
- WO 9535343 A
- EP 0174225 A
- EP 0581642 A

- EP 0739924 A
- EP 0581641 A
- EP 0425341 A
- WO 2010130930 A
- FR 2562467
- EP 0394900 A